# EUROPEAN PATENT APPLICATION

(11) **EP 3 135 160 A1**
(43) Date of publication of application: **01.03.2017**
(21) Application number: 15183082.5
(22) Date of filing: 31.08.2015
(51) Int. Cl.: A47J 31/40, A47J 31/42, A47J 31/50

(54) **COFFEE BEAN SUPPLY DEVICE, COFFEE BREWING APPARATUS AND COFFEE BREWING PROCESS MAKING USE OF THE DEVICE**

(71) Applicant: Müller, Bernd, 47447 Moers (DE); Lessmann, Lennart, 07973 Greiz (DE)
(72) Inventor: Müller, Bernd, 47447 Moers (DE); Lessmann, Lennart, 07973 Greiz (DE)
(74) Representative: Schwabe - Sandmair - Marx

(57) **Abstract**

The present invention relates to a coffee bean supply device (100) comprising a coffee bean supply device housing (110) formed by at least one wall (111) comprising a bottom wall (116), two side walls (114), a front wall (115), a rear wall (115') and a top wall (113), said at least one wall (111) surrounding an inner space (120) capable of being filled at least partially with coffee beans; said at least one wall (111) or said two side walls (114, 115) and/or top wall (113) including at least one partial upper opening (112) of the coffee bean supply device housing (110) capable of serving as a coffee bean refill opening (112); said coffee bean supply device housing (110) also comprising a coffee bean delivery opening (117) capable of serving as an opening allowing a delivery of coffee beans contained in the inner space (120) of said coffee bean supply device (100) to a coffee bean inlet (220). The invention also relates to a coffee brewing apparatus (300), a coffee bean storage container (300) and to a coffee brewing process making use of the coffee bean supply device 100.

## Description

The present invention relates to a coffee bean supply device capable of holding, metering and supplying coffee beans to a coffee brewing apparatus. The invention also relates to a coffee brewing apparatus comprising the new coffee bean supply device and relates to a process of brewing a coffee beverage while making use of the coffee bean supply device. The invention also relates to a coffee bean storage container capable of supplying coffee beans from a large coffee bean stock to a coffee bean supply device of the invention.

Coffee brewing apparatus capable of brewing a fresh coffee beverage or - shortly - fresh coffee from water and - originally - whole coffee beans or fragments of coffee beans are well known. When introduced, the coffee brewing apparatus combined the former separate actions (and locations for performing said actions) into one apparatus or one automated method, respectively.

Basically (and without restriction), these are the actions of (i) storing whole (or fragmented) coffee beans and water; (ii) metering an appropriate amount of coffee beans to the grinding means; (iii) grinding said coffee beans in a grinding means; (iv) metering the appropriate portion(s) of ground coffee fed from the grinding means to a coffee brewing filter means; (v) flooding the coffee grounds on the filter means with hot water; (vi) extracting, with said hot water, the watersoluble coffee bean components from said coffee grounds; (vii) separating the aqueous extract containing the water-extractable components of the coffee beans (called "coffee beverage" or shortly "coffee") from the residual solid coffee bean components; (viii) collecting said extract (called "coffee beverage" or "coffee") in a suitable receptacle for drinking the coffee beverage or "coffee"; and (ix) discarding the residual solid coffee grounds.

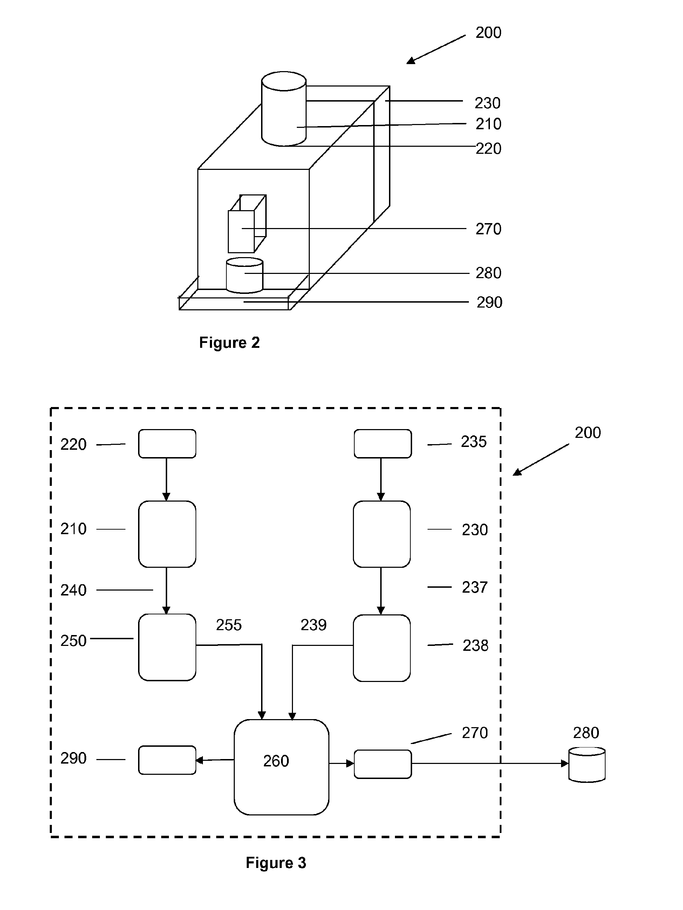

According to the above process steps to be passed through for automatically brewing coffee, such coffee brewing apparatus usually comprise: (i) a storage means for receiving and storing whole or fragmented coffee beans, usually coffee beans of one type, only; (ii) a water tank; (iii) a grinder or mill (including a driving means, usually a motor, for the mill, and metering means for metering an appropriate amount of coffee beans for the grinding process); (iv) metering means for metering an appropriate amount of coffee grounds to a coffee brewing unit; (v) a water-conveying means (e. g. a pump) including water heating means for feeding hot water to the coffee brewing unit; (vi) a coffee brewing unit feeding the coffee brewed into a suitable receptacle for drinking; and (vii) a container for receiving the depleted solid coffee ground residuals for later discarding them. An example of such an automated coffee brewing apparatus of the prior art is shown in Figure 2.

Numerous process steps have to be carried out by coffee brewing apparatus. The coffee brewing apparatus' components included into these process steps of the prior art (and also in accordance with the invention) are shown in Figure 3, wherein the dotted line box 200 represents the coffee brewing apparatus 200. Coffee beans and water are supplied through respective inlets 220, 235 to their respective storage containers 210, 230, guided through respective coffee bean or water passageways 240, 237 to the coffee bean grinding means/mill 250 or the water heater 238, respectively. From there, respective coffee grounds or heated water passageways 255, 239 guide the coffee grounds and the heated water to the coffee brewing unit 260. A brewed coffee beverage flows from the coffee brewing unit 260 through the brewed coffee beverage outlet 270 outside the coffee brewing apparatus 200 into a drinking receptacle 280, while depleted coffee grounds are guided from the coffee brewing unit 260 to a depleted coffee discharge container 290. Including numerous apparatus components, automated coffee brewing apparatus are technically complex "machines" and require the co-operation of said large number of electrically and mechanically connected parts. After having been used for brewing coffee in a professional scale, only, at the beginning of their technical development, coffee brewing apparatus were, and are now developed for brewing coffee beverages on the private consumer or household level and on the professional level.

Such type of coffee brewing apparatus had one disadvantage in allowing only one type of coffee beans to be stored in the storage container and fed to the apparatus for brewing a coffee beverage. Hence, the user (especially the private user) had a selection of only one type of coffee beans available for brewing coffee.

From the viewpoint of costs and of the expected convenience for the user to select different types and strengths of the coffee beverage, there were also developed coffee brewing apparatus brewing a coffee beverage from one-cup amounts of powdered coffee packed into small cartridges made of e. g. aluminum. Such cartridges are eluted by a suitable amount of hot water swallowing the coffee into a drinking receptacle. Such (relatively low cost) coffee powder-dissolving machines have a great advantage in allowing powdered coffee of many different types and strengths to be filled into said cartridges. Different cartridges were used for making coffee in said type of machines, according to the user's selection. Hence, the consumers' wish of selecting a large variety of types and strengths of coffee powder for making coffee of different taste and strength was met, when making coffee on these machines by using coffee powder packed into such cartridges.

On the other hand, due to a use of e. g. aluminum cartridges and the expensive process of packaging and storing the coffee powder in single sachets and eluting the coffee powder from said sachets in the coffee-making process for one single cup of coffee, the cartridge system (per one portion of coffee received) is relatively expensive. Moreover, the special size and shape of the cartridge allows that only few, or even only one, type of cartridge or sachet can be used for one type of coffee making apparatus. Furthermore, the disposal of the aluminum cartridges creates a lot of environmentally "unacceptable" garbage. In addition, the user's wish of having a coffee beverage freshly brewed from freshly ground coffee beans/coffee grounds cannot be met by coffee made of dissolving coffee powder in hot water.

Hence, it was found that there is a need for an improvement of conventional coffee brewing apparatus in allowing that two (or even several) types of coffee beans be fed from the storage container to the coffee brewing unit of a conventional coffee brewing apparatus. When seeking for improvement, the conventional inlet for feeding pre-ground coffee grounds to the known coffee brewing apparatus was not considered as a suitable solution. One reason is that pre-grinding coffee beans in a separate grinder (or buying pre-ground coffee powder) was considered to be in contradiction the user's wish of brewing coffee from freshly ground coffee beans.

This need was accomplished with on two routes:
Some conventional coffee brewing apparatus comprise two non-detachable coffee bean storage containers/cartridges for exactly two different types of coffee beans to be fed to the coffee bean grinding means of the coffee brewing apparatus.

In one type of such conventional coffee brewing apparatus, the two coffee bean storage containers/cartridges for the two different types of coffee beans each were accompanied by one separate grinding mechanism, and also two separate coffee brewing units were provided. The main advantage is that, basically, this apparatus is two coffee brewing apparatus in one, resulting into a completely separated coffee brewing process for the two types of coffee beans. Thereby, the taste of each of the two types of freshly ground coffee beans in the coffee could be developed very well.

On the other side, the user's choice was restricted to the two different types of coffee beans, and this proposal included the disadvantage of a relatively high price of the apparatus due to the two coffee bean container/two grinding means/two coffee brewing unit structure.

In a different proposal, a coffee brewing apparatus has two coffee bean storage containers/cartridges I and II delivering the coffee beans of types I and II to the same (i. e. one) grinding mill and to the same (i. e. one) coffee brewing unit. This created the problem that, in the space between the coffee bean storage container I (containing coffee beans of the type I) and the grinding mill, as well as within the grinding mill and in the space between the grinding mill and the coffee brewing unit, there were still left coffee beans of the type I (and ground coffee beans of the type I), when grinding coffee beans of the type II and, after grinding the coffee beans of the type II, the brewing process with coffee grounds of the type II was intended to be started. At that time, the coffee brewing apparatus still continued brewing coffee extracted from coffee beans (and coffee grounds) of the type I for up to two further brewing steps, before the desired brewing of coffee with coffee grounds of the type II started. In other words: Residual (whole or fragmented) coffee beans of the type I in the space between the storage container I and the grinding mill, as well as residual coffee grounds of the type I in the grinding mill and in the space between the grinding mill and the coffee brewing unit prevent the desired coffee made of the coffee beans from the container II containing coffee beans of the type II from being brewed.

The document DE 10 2013 106 917 relates to a coffee brewing apparatus having a housing accommodating a brewing unit, and a circular front side opening for operating (e. g. withdrawing or sliding in) a cylindrical powder chamber for metering, holding, and supplying coffee powder. The cylindrical powder chamber, in its filling position wholly or partially withdrawn from the coffee brewing apparatus' front opening manually by the user, is filled with coffee powder via an inlet accommodated in a position suitable for feeding coffee powder into the powder chamber. The cylindrical powder chamber is vertically slidingly inserted into the coffee brewing apparatus' circular front opening manually and, by handling means accommodated at the cylinder's front side facing the user, turned around the cylinder's vertical longitudinal axis into a coffee powder supply position, where the inlet, now becoming the coffee powder outlet is facing a coffee powder funnel under the outlet into which the coffee powder is emptied. The funnel, itself positioned above the coffee brewing apparatus' coffee brewing unit, is guiding the coffee powder by gravity to the coffee brewing unit for the subsequent coffee brewing step.

Again, this prior art proposal, albeit allowing brewing one portion of coffee from coffee powder according the user's selection, did not meet the requirement of allowing brewing one portion (or a pre-selectable number of portions, e. g. 2 or 3 portions) of a coffee beverage, especially of coffee, from freshly ground coffee beans of the type desired by the user.

What would be needed is a coffee bean receiving, metering and supplying chamber attachable to a coffee brewing apparatus and capable of supplying a metered amount of coffee beans to the coffee bean grinding means or coffee bean mill of an automated coffee brewing apparatus. Such a coffee bean supply chamber should allow metering a predeterminable amount of fresh coffee beans to a coffee brewing apparatus suitable to brew one or two portions of a coffee beverage, preferably of coffee, of the type and strength desired by the user. The coffee beans supplied by the coffee bean supply chamber should be sufficient, but should not exceed the amount of coffee beans, needed to grind the coffee beans to coffee grounds required to brew a coffee beverage of the desired type and strength especially desired by the user in an amount of one or two portions thereof. Moreover, such especially desired coffee beverage should be brewed by the coffee brewing apparatus in a row with coffee beverages brewed from coffee beans "regularly" brewed by said coffee brewing apparatus, i. e. from coffee beans stored, held and supplied from a "regular" coffee bean container of the size storing and holding coffee beans of a "standard" type, i. e. without using the coffee bean supply device of the invention.

It was surprisingly found that the above objects, and even further objects, can be achieved by the coffee bean supply device, the coffee brewing apparatus and the coffee brewing process of the present invention.

Hence, the invention relates to a coffee bean supply device comprising
- a coffee bean supply device housing formed by at least one wall comprising a bottom wall, two side walls, a front wall, a rear wall and a top wall, said at least one wall surrounding an inner space capable of being filled at least partially with coffee beans;
- said at least one wall or said two side walls and/or top wall including at least one partial upper opening of the coffee bean supply device housing capable of serving as a coffee bean refill opening;
- said coffee bean supply device housing also comprising a coffee bean delivery opening capable of serving as an opening allowing a delivery of coffee beans contained in the inner space of said coffee bean supply device to a coffee brewing apparatus' coffee bean inlet.

Preferred embodiments of said coffee bean supply device are claimed in dependent claims 2 to 6.

The invention also relates to a coffee brewing apparatus, comprising a water storage container capable of storing and holding water and of supplying it via a water inlet to a water heating means for heating the water for brewing coffee; a coffee bean passageway connecting a coffee bean inlet to a coffee bean grinding means or mill; a coffee grounds passageway connecting the mill to a coffee brewing unit; the coffee brewing unit where fresh coffee is brewed from the coffee grounds supplied by the coffee grounds passageway and the hot water supplied by a water conveying means from the water heating means; a brewed coffee beverage outlet filling the freshly brewed coffee into a drinking receptacle; and a depleted coffee discharge container, said coffee brewing apparatus further comprising a coffee bean supply device receiving means connected to or integrated in the coffee brewing apparatus for receiving at least one coffee bean supply device as described in more detail below and in an arrangement allowing a supply of coffee beans to the coffee brewing apparatus' coffee bean inlet for brewing coffee.

Preferred embodiments of the coffee brewing apparatus of the present invention are claimed in the dependent claims 8 to 10.

The invention also relates to a coffee bean storage container capable of supplying and metering coffee beans from a coffee bean stock in a storage space of the container to a coffee bean supply device as described below in detail and connected to the container, said coffee bean storage container comprising, below the storage space surrounded by at least one closed wall, a loading space accessible via a coffee bean supply device receiving opening and capable of receiving at least one coffee bean supply device as described below in detail. The coffee bean storage container further comprises at least one intermediate separate wall provided with at least one coffee bean loading gate, the position of the coffee bean loading gate matching with the coffee bean supply device's coffee bean refill opening, thereby enabling a supply of coffee beans upon opening of the coffee bean loading gate, through the partial upper opening of the coffee bean supply device housing to the inner space of the coffee bean supply device received in said coffee bean supply device receiving opening.

A preferred embodiment of said coffee bean storage container is claimed in claim 12.

Finally, the invention also relates to a process of brewing coffee from coffee grounds obtained immediately before the brewing step from freshly ground coffee beans on an automatic coffee brewing apparatus, the process comprising the steps of
(a) providing for a coffee brewing apparatus comprising a water storage container capable of storing and holding water and of supplying it via a water inlet to a water heating means for heating the water for brewing coffee; a coffee bean passageway connecting the coffee brewing apparatus' coffee bean inlet to a coffee grinding means or mill; a coffee grounds passageway connecting the mill to a coffee brewing unit; the coffee brewing unit where fresh coffee is brewed from the coffee grounds supplied by the coffee grounds passageway and the hot water supplied by water conveying means from the water heating means; a brewed coffee beverage outlet filling the freshly brewed coffee into a drinking receptacle; and a depleted coffee discharge container;
(b) filling a releasable detachable coffee bean supply device (100) as described below in more detail with a type of desired coffee beans in a predetermined coffee bean amount sufficient for brewing at least one portion of a freshly brewed coffee beverage, preferably with customized origin coffee beans and/or customized roastings of coffee beans and/or customized blends of coffee beans;
(c) connecting the releasably detachable coffee bean supply device filled in step (b) to, or integrate it in, said coffee brewing apparatus and causing the filling of coffee beans in the coffee bean supply device to move to the coffee bean apparatus' coffee bean inlet;
(d) starting the coffee brewing automated procedure on the coffee brewing apparatus, whereupon
(e) the coffee brewing apparatus requests a supply of said predetermined amount of coffee beans from the coffee bean supply device
(f) to be delivered from the coffee bean supply device's housing inner space and passing its coffee bean delivery opening
(g) to the coffee brewing apparatus' coffee bean inlet; and
(h) delivered via the coffee brewing apparatus' coffee bean passageway to the coffee bean grinding means or mill and further to the coffee brewing apparatus' coffee brewing unit;
(i) receiving a coffee beverage at the coffee brewing apparatus' brewed coffee beverage outlet; and optionally
(j) disconnecting the coffee bean supply device connected or integrated in step (c) from said coffee brewing apparatus; and optionally
(k) refilling said detachable coffee bean supply device as described below in more detail and disconnected in step (j) above with selected coffee beans, connecting said coffee bean supply device to, or integrate it in, the coffee brewing apparatus and starting the coffee brewing automatic procedure on the coffee brewing apparatus with steps (d) et seq. above.

In an alternative embodiment of the process of the invention, process of brewing coffee from coffee grounds obtained immediately before the brewing step from freshly ground coffee beans on an automatic coffee brewing apparatus comprises the steps of
(a) providing for a coffee brewing apparatus comprising a water storage container capable of storing and holding water and of supplying it via a water inlet to a water heating means for heating the water for brewing coffee; a coffee bean passageway connecting the coffee brewing apparatus' coffee bean inlet to a coffee grinding means or mill; a coffee grounds passageway connecting the mill to a coffee brewing unit; the coffee brewing unit where fresh coffee is brewed from the coffee grounds supplied by the coffee grounds passageway and the hot water supplied by water conveying means from the water heating means; a brewed coffee beverage outlet filling the freshly brewed coffee into a drinking receptacle; and a depleted coffee discharge container;
(b) providing for a coffee bean storage container as described in more detail below and capable of supplying and metering coffee beans from a coffee bean stock in a storage space of the container to a coffee bean supply device as described in more detail below and connected to, or integrated in, the coffee bean storage container, and filling the storage space of the coffee bean storage container with a type of desired coffee beans in an amount sufficient for brewing at least one portion of a freshly brewed coffee beverage, preferably with customized origin coffee beans and/or customized roastings of coffee beans and/or customized blends of coffee beans;
(c) filling a releasable detachable coffee bean supply device as described in more detail below with said type of desired coffee beans in a predetermined coffee bean amount sufficient for brewing at least one portion of a freshly brewed coffee beverage via the coffee bean storage container by inserting at least one coffee bean supply device as described in more detail below into the coffee bean storage container's loading space and allowing said predetermined amount of coffee beans to move from the coffee bean storage container to the inner volume of the coffee bean supply device;
(d) connecting the releasably detachable coffee bean supply device filled in step (c) to, or integrating it in, said coffee brewing apparatus and causing the filling of coffee beans in the coffee bean supply device to move to the coffee bean apparatus' coffee bean inlet;
(e) starting the coffee brewing automated procedure on the coffee brewing apparatus, whereupon
(f) the coffee brewing apparatus requests a supply of said predetermined amount of coffee beans from the coffee bean supply device
(g) to be delivered from the coffee bean supply device's housing inner space and passing its coffee bean delivery opening
(h) to the coffee brewing apparatus' coffee bean inlet; and
(i) delivered via the coffee brewing apparatus' coffee bean passageway to the coffee bean grinding means or mill and further to the coffee brewing apparatus' coffee brewing unit;
(j) receiving a coffee beverage at the coffee brewing apparatus' brewed coffee beverage outlet; and optionally
(k) disconnecting the coffee bean supply device connected or integrated in step (d) from said coffee brewing apparatus; and optionally
(l) refilling said detachable coffee bean supply device as described below in more detail and disconnected in step (k) above manually or by means of the coffee bean storage container with selected coffee beans, connecting said coffee bean supply device to, or integrate it in, the coffee brewing apparatus and starting the coffee brewing automatic procedure on the coffee brewing apparatus with steps (e) et seq. above.

A preferred embodiment of the coffee brewing process of the invention is claimed in claim 15.

The invention is now explained in more detail below by referring to the Figures, which show preferred embodiments of the invention. While referring to these preferred embodiments, such reference is considered to serve a better understandable explanation of the principles of the invention and should not be considered to restrict the invention to these preferred embodiments explained in the specification and shown in the Figures.

In the Figures,
Figures 1A and 1B show two similar embodiments of coffee bean supply devices of the invention;
Figure 2 shows an exemplary embodiment of a prior art conventional automated coffee brewing apparatus;
Figure 3 shows a flow sheet of a prior art conventional coffee brewing procedure, especially including those coffee brewing apparatus' parts conventionally included into said coffee brewing procedure;
Figure 4 shows another exemplary embodiment of a coffee bean supply device of the invention;
Figures 5A, 5B and 5C show another exemplary embodiment of a coffee bean supply device of the invention;
Figures 6A, 6B and 6C show another exemplary embodiment of a coffee bean supply device of the invention;
Figure 7 shows an exemplary embodiment of a coffee bean storage container of the invention;
Figure 8 shows an exemplary embodiment of a coffee brewing apparatus of the present invention;
Figure 9 shows another exemplary embodiment of a coffee bean supply device of the invention, similar to Figure 4;
Figure 10 shows a side sectional view of the coffee bean loading space of the coffee bean storage container of the present invention;
Figures 11A, 11B and 11C show another exemplary embodiment of a coffee bean supply device of the invention, similar to Figures 6A, 6B and 6C;
Figure 12 shows an exemplary embodiment of the arrangement, in a coffee brewing apparatus, of the coffee mill relative to its driving means; and
Figure 13 shows another exemplary embodiment of the arrangement, in a coffee brewing apparatus, of the coffee mill relative to its driving means.

The invention is now explained in more detail by referring to the Figures showing preferred embodiments of the invention. Such an explanation has the purpose of explaining the invention to the skilled person for its better understanding by referring to preferred examples and to the Figures exemplarily showing such preferred examples. However, the invention should not be restricted to the preferred embodiments. The scope of the invention is given by the attached claims.

The term "coffee beans" as used in the present specification and claims is understood to mean roasted or burnt coffee beans. Coffee beans as addressed in the specification and claims are understood to include whole (roasted) coffee beans and fragments of coffee beans intentionally or unintentionally obtained from whole roasted coffee beans, which fragments still have to be ground before being suitable for brewing coffee. In accordance with this meaning, fragments of coffee beans do not include coffee grounds.

In the present claims and in the specification, the term "storing coffee beans" is understood to mean that coffee beans are present within the inner volume of a coffee bean storage container 110 of a conventional coffee brewing apparatus 200 or in the inner volume/space 310 of the coffee bean storage container 300 of the present invention for an extended period of time, without that their properties, e. g. their flavor, their taste and their mechanical properties, are deteriorated in the course of the time. This is to be achieved, and in accordance with the invention is achieved, to an extent at least as in any purchasable coffee bean package containing coffee beans for brewing fresh coffee from freshly ground coffee beans. The term "storing coffee beans" may also include a storage of coffee beans, within the inner volume of a coffee bean storage container 210 of a conventional coffee brewing apparatus 200 or in the inner volume/space 310 of the coffee bean storage container 300 of the present invention, previously packed immediately after the process of roasting said coffee beans into usual sales containers, extending to the period of shipping said roasted coffee beans contained within said sales containers to any sales location and, finally, to the consumer, and the filling it into the inner volume of a coffee bean storage container 210 of a conventional coffee brewing apparatus 200 or in the inner volume/space 310 of the coffee bean storage container 300 of the present invention. The term "storing coffee beans" is meant to also cover time periods at the consumer's place until to a complete consumption of all coffee beans contained in inner volume of such storage containers 210, 300.

In accordance with the invention, after having been emptied the storage containers 110, 300 completely, it might be refilled with fresh roasted coffee beans according to the user's choice. Keeping these refill coffee beans stored within any of the containers 110, 300 is also covered by the term "storing coffee beans".

Similarly, the term "holding coffee beans" as used in the specification and claims is considered to mean the action of mechanically holding coffee beans within the space or inner volume 310. Hence, the term "holding" is understood to mean the maintenance of a physical presence of the coffee beans within the space or inner volume 310 of the containers 110, 300.

Hence, the term "holding coffee beans" is the opposite term to the above third term "supplying coffee beans": The latter, in accordance with the present invention, is understood in the present specification and claims to mean that coffee beans held within the coffee bean container's space or inner volume 310 surrounded by the at least one outer container wall are delivered or supplied to the coffee brewing apparatus 200 for further treatment (described in detail below) and, finally, for brewing a coffee beverage.

In accordance with the present invention, the term "coffee brewing apparatus" (bearing the reference numeral "200" where addressed in the Figures and in the present specification and claims) is understood in the present specification, claims and Figures to mean an apparatus capable of brewing coffee as a hot coffee beverage from freshly ground coffee beans, i. e. from coffee grounds freshly prepared, and from hot water in an automated manner. The term "coffee brewing apparatus", as meant in the present specification and claims includes (but is not restricted to) a fully automated coffee brewing apparatus receiving coffee beans from any coffee bean container, usually an apparatus-connected coffee bean container, or from a coffee bean supply device 100 of the present invention and delivering the coffee beverage (and as a discardable material: the depleted coffee grounds amount) in a fully automated manner and in a few seconds through a pressure-initiated contact of the eluting water to the coffee grounds. Furthermore, the term "coffee brewing apparatus" includes apparatus capable of brewing coffee for professional use (e.g. continuously in large amounts of single - large or small - coffee beverage portions over an extended period of time) or for private household use (e. g. intermittently in small amounts of - usually small - coffee beverage portions a few times a day, only).

The term "coffee beverage", as used in the present specification and claims is understood to broadly mean all beverages consisting of, or comprising, the product of an elution of coffee grounds with warm or even hot water under normal (i. e. atmospheric) water pressure or by applying increased water pressure. Hence, the term "coffee beverage" may include, but is not restricted to, coffee (in the usual sense), espresso, cappuccino, Latte macchiato, Greek coffee, Cafe Americano, "Vienna Mélange" and further coffee beverage specialties.

The terms "coffee" and "coffee beverage" are used in the present specification and claims synonymously, often.

The coffee bean supply device 100 of the invention, the coffee brewing apparatus 200 of the invention, the coffee bean storage container 300 of the invention and the coffee brewing process of the invention are suitable for professional use and for private (household) use, and it is intended that they be operated on a professional use level and on a private (household) level as well.

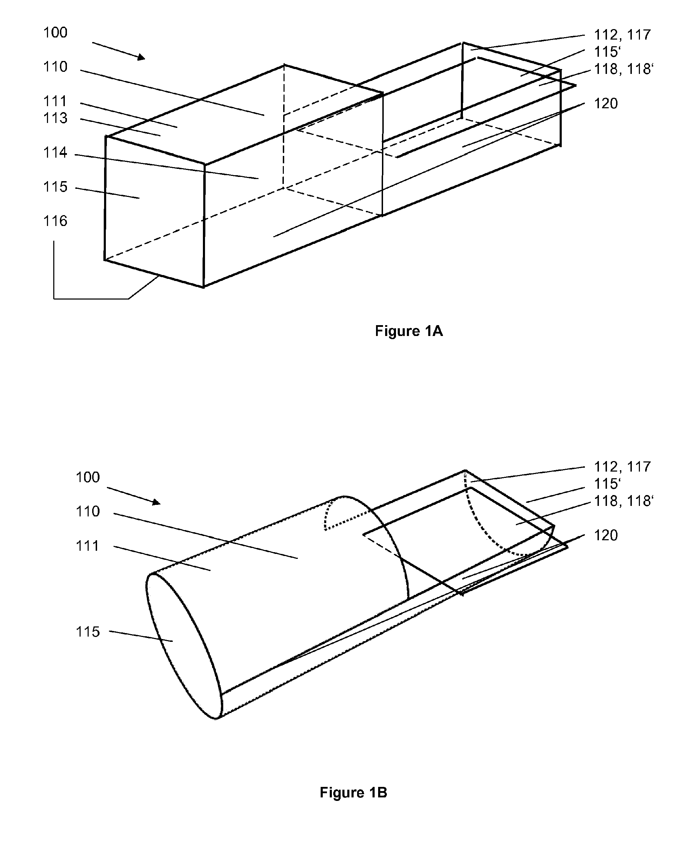

Reference is now made to Figures 1A and 1B, which show two similar embodiments of coffee bean supply devices 100 of the invention. Figure 1A shows an exemplary box-shape coffee bean supply device 100 having a rectangular cross section, and Figure 1B shows an exemplary cylindrical coffee bean supply device 100 having a circular cross section. A skilled person will recognize that the coffee bean supply device 100 may have, in accordance with the invention, a number of further, different shapes and may select the applicable shape in accordance with the requirements of the specific case without being restricted by the present invention.

As shown in Figures 1A and 1B, the coffee bean supply device 100 comprises a coffee bean supply housing 110 which is formed of at least one wall 111. In the case of the cylindrical coffee bean supply housing 100 shown in Figure 1B, the at least one housing is formed of one substantially cylinder-shape housing 100 which is formed by the cylinder jacket as one wall and surrounds the inner cylinder space 120, with the exception of the front 115 and rear 115' walls of the housing 100, thereby surrounding the housing's inner space 120 capable of being filled at least partially, or also completely, with coffee beans. In the case of the box-shape housing 100 shown in Figure 1A, the at least one wall 111 is formed by six walls, i. e. a top wall, side walls (114, 114), a bottom wall 116, a front wall 115 and a rear wall 115', which walls surround the housing's inner space 120 capable of being filled at least partially, or also completely, with coffee beans.

A skilled person will recognize from the above specification that the coffee bean supply device shapes are not restricted to the box shape and to the cylinder shape and that, for achieving the aims of the invention, a number of other shapes (e. g. a conus shape or an ellipsoid shape) are considered and may be selected accordingly. However, the invention is further explained exemplarily by referring to the box-shape and cylinder-shape housings shown in Figures 1A and 1B.

In accordance with the invention, said one (surrounding) cylinder-shape wall 111 in the case of the cylinder-shape coffee bean supply device 100 exemplarily shown in Figure 1B, or said two side walls 114, 114 and/or said top wall 113 in the case of the box-shape coffee bean supply device 100 shown in Figure 1A include at least one partial upper opening 112 of the coffee bean supply device housing 110 capable of serving as a coffee bean refill opening 112.

There may be one partial upper opening 112 of the coffee bean supply device housing 110, or there may be several, e. g. two or even three, upper openings 112 of the coffee bean supply device housing 110. A skilled person may select the number of upper openings - without being restricted to the above exemplary embodiments - in accordance with the requirements of a specific case. In preferred embodiments of the invention, which may be realized alone or together with one or several or all other features of the invention, the surrounding wall(s) 111 or 114/113 include(s) one upper opening 112 of the coffee bean supply device housing 110.

The shape(s) of the upper opening(s) of the coffee bean supply device housing 110 is/are not restricted in accordance with the present invention, and a skilled person may select the shape of the one or several upper openings - without being restricted to the above exemplary embodiments - in accordance with the requirements of a specific case. As an example (and shown exemplarily in Figures 1A and 1B), the shape of the upper opening 112 of the coffee bean supply device housing 110 is a partial "cut-away" of the housing's upper part of the wall 111 (in the case of the cylinder-shape coffee bean supply device housing 110 of Figure 1 A) or a partial "cut-away" of the housing's side walls 114, 114 and of the top wall 113 (in the case of the box-shape coffee bean supply device housing 110 shown in Figure 1A), thereby leaving a longitudinal (rear) portion of the coffee bean supply device's housing 110 open on the upper side. In other exemplary embodiments of the invention, the coffee bean supply device's housing 110 may have left in its upper side, or may have cut, into its upper side, e. g. in the longitudinally rear portion, a window of a size and shape sufficient to allowing an entry of coffee beans, either by an automated refill action or by a manual refill action, into the coffee bean supply device housing's inner space 120. In a further preferred embodiment of the coffee bean supply device 100, which may be realized alone or together with one or several or all other features of the invention, the window left in or cut into the housing's upper side may be releasably covered with a suitably sized and suitably shaped releasable cover or lid. Preferably, the opening 112 is accommodated in the rear portion of the coffee bean supply device, i. e. in the portion remote from the end of the coffee bean supply device housing 110 formed by the front wall 115. This is advantageous, because such a structure allows a convenient fill or refill of coffee beans into the coffee bean supply device 100, either automatically or manually, as will be described in detail below.

In accordance with the invention, the coffee bean supply device housing 110 also comprises a coffee bean delivery opening 117 capable of serving as an opening allowing a delivery of coffee beans contained in the inner space 120 of said coffee bean supply device 100 to a coffee brewing apparatus 200, preferably to a coffee brewing apparatus' coffee bean inlet 220.

In further preferred embodiments of the invention which may be realized alone or together with one or several or all other features of the invention, the coffee bean supply device housing's coffee bean delivery opening 117 is formed in the at least one wall 111 (e. g. in the case of the coffee bean supply device 100 as exemplarily shown in Figure 1B) or in one of the walls top wall 113, side walls 114 or bottom wall (e. g. in the case of a coffee bean supply device 100 as exemplarily shown in Figure 1A) in such a manner that the coffee beans, when supplied to the coffee brewing apparatus 200, can be delivered due to their gravity, i. e. falling downwards out of the coffee bean supply device's housing 110.

Even more preferably, all coffee beans of one load should be delivered to the coffee brewing apparatus, i. e. to its coffee bean inlet 220, without exception, i. e. without leaving any coffee bean in the inner space 120 of the coffee bean supply device. This can be effected preferably, and also as a feature realizable alone or together with one or several or all other features of the invention, by providing the coffee bean delivery opening on the lower side of the coffee bean supply device's housing 110. This is advantageous, because all coffee beans previously filled into the inner space 120 of the coffee bean supply device 100 will move downwards due to gravity, and any means advancing or conveying the coffee beans towards the coffee brewing apparatus 200, e. g. its coffee bean inlet 220, is obsolete.

In an alternative embodiment of the invention, which may be realized alone or together with one or several or all other features of the invention, the coffee bean delivery opening 117 is not necessarily located on the lower side of the coffee bean supply device's housing 110, but on any other side, e. g. may be part of the rear wall 115' or of one of the side walls 114, 114 or of the top wall 113 (as is explained below) of the housing 110, subject to the condition that, when emptying the coffee beans from the coffee bean supply device 100 into the coffee brewing apparatus 200, the coffee bean supply device housing's side bearing the coffee bean delivery opening 117 can be turned to the lower side, thereby enabling the coffee beans to move downwards by gravity. In even more preferred embodiments of the invention, the coffee bean delivery opening 117 is located, at whatever side explained above or explained below, at a rear part of the respective housing side, wherein the term "rear part", when used in the present specification and in the claims, is understood to mean that part remote from the front wall 115 and adjacent to the rear wall 115', respectively. In another, even more preferred embodiment of the invention, which may be realized alone or together with one or several or all other features of the invention, the coffee bean supply device 100, before emptying the coffee beans into the coffee brewing apparatus 200, is turned around its longitudinal axis upside down, and the coffee beans are emptied via the (former) upper side (or refill) opening 112 which, after the upside down turn, is openable for a passage of the coffee beans through the former upper (or refill) opening 112, which (after the upside down turn) has now the function of the coffee bean delivery opening 117.

Even more preferably, the coffee bean delivery opening 117 is accommodated in the rear portion of the coffee bean supply device, i. e. in the portion remote from the end of the coffee bean supply device housing 110 formed by the front wall 115. This is advantageous, because such a structure allows a convenient move of coffee beans out of the coffee bean supply device 100 into the coffee brewing apparatus, e. g. into its coffee bean inlet 220, either automatically or manually, as will be described in detail below.

The coffee bean supply device 100 (and its parts and further components) are made of an easily formable material of light weight, stable in its dimensions, durable over a long period of time, and is compatible with food (in general) and with coffee beans especially. Preferred materials are metals, wood, glass, rigid organic polymers, and rigid organic polymers line polyethylene, polypropylene blends and copolymers thereof, and polycarbonate are preferred, without restricting the invention to those.

In further embodiment of the invention, which may be realized alone or together with one or several or all other features of the invention, said partial upper opening serving as a coffee bean refill opening 112 and/or said coffee bean delivery opening 117 each are closed by an openable cover 118, 118'. This is also shown in Figure 1A and Figure 1B, where - exemplarily - the cover 118, 118' is - exemplarily and without restriction to said embodiment - in the shape of a rectangular plate and is of a size sufficient to cover the opening 112 or 117. In case that the opening(s) is/are in a different (e. g. bent) shape, the cover(s) is/are adapted to such a shape in order to achieve a function of closing the respective opening(s). Of course, a skilled person will recognize that, in case that the upper (or refill) opening 120 is the same opening as the coffee bean delivery opening 117, there will be needed only one cover 118 of a shape and size to closely cover the one opening having together the coffee bean refill and coffee bean delivery functions, at different times of the coffee brewing process.

Preferably said partial upper opening serving as a coffee bean refill opening 112 and/or said opening serving as a coffee bean delivery opening 117 each are closed by an openable cover 118, 118'. In even more preferred embodiments of the invention, the coffee bean delivery opening cover 118' - if the coffee bean delivery opening 117, and its cover 118', are present separately - is closed when the coffee bean refill opening cover 118 is open.

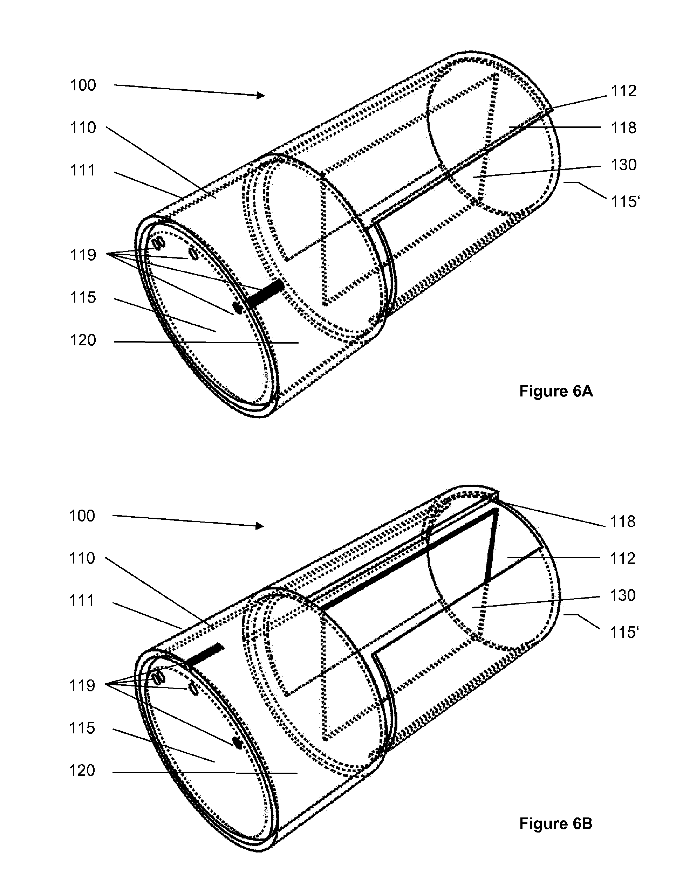

As explained above, openable covers 118 must have a shape and configuration allowing their opening in accordance with the requirements of the specific opening. As shown in Figures 1A and 1B, the openable covers may be plane plates of - exemplarily - rectangular shape, slidable into a direction fitting with the space requirements of the opening situation. However, the invention is not restricted to slidable plane covers 118. A skilled person knows other cover shapes and other routes of opening and closing covers and may select shapes and routes of opening in accordance with the requirements of a specific case. (Non-restricting) examples of covers 118 are bent covers (see Figures 6A to 6C) (e. g. forming a shape of a partial cylinder wall), or are covers which, instead of being slided, might be pivoted, turned, tilted, folded, collapsed, all those routes in accordance with the space requirements of a specific case.

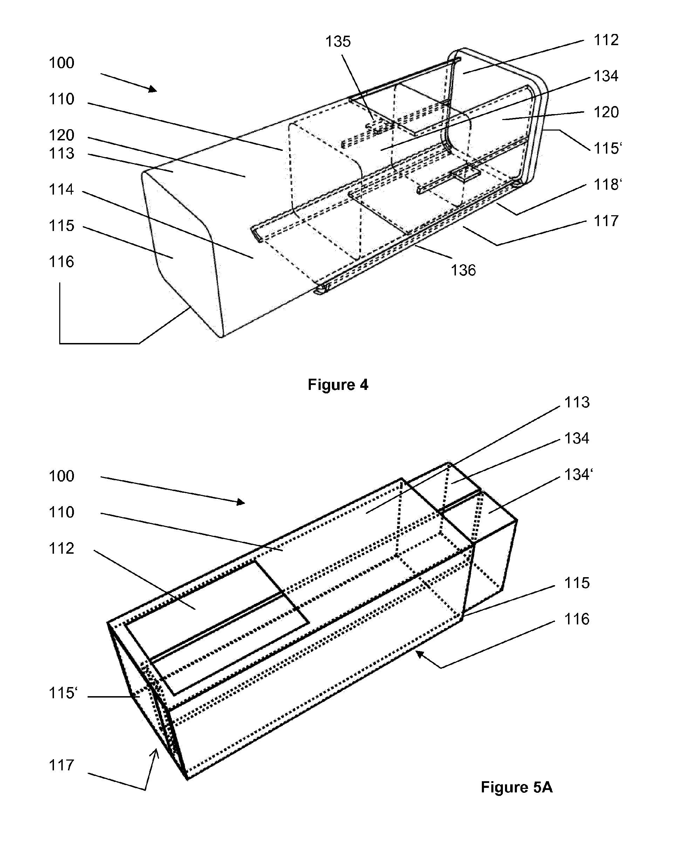

Reference is now made to Figure 4 which shows another exemplary embodiment of a coffee bean supply device 100 of the invention, which is in the box-shape. The coffee bean supply device 100 comprises a housing 110 formed by at least one housing, in the case shown in Figure 4 formed of six walls, i. e. the front wall 115, the top wall 113, two side walls 114 (of which one faces the observer of Figure 4), a bottom wall 116 and a rear wall 115' (which turns away from the observer of Figure 4 and is the wall opposite to the front wall 115). The six walls obviously surround the coffee bean supply device's inner space 120.

As an exemplary and preferred embodiment which may be realized alone or together with one or several or all other features of the invention, the top wall 113 of the coffee bean supply device's housing 110 is provided with a partial upper opening 112, i. e. an opening which does not cover the whole top wall 113, but covers the rear part of the top wall 113 of the coffee bean supply device's housing 110. In the case shown in Figure 4, the upper opening 112 is not covered with a cover 118. In a different embodiment, a cover 118 could be applied so as to cover the partial upper opening 112 provided in the top wall of the coffee bean supply device's housing 110. As will be described below, the partial upper opening 112 is capable of serving as a coffee bean refill opening 112.

As is also shown in Figure 4, the bottom wall 116 of the coffee bean supply device's housing 110 exemplarily comprises a coffee bean delivery opening 117. Said coffee bean delivery opening 117 does not cover the whole bottom wall 116, but covers the rear part of the bottom wall 116 of the coffee bean supply device's housing 110 opposite to the upper partial opening 112. In the case shown in Figure 4, the coffee bean delivery opening 117 is covered with a cover 118'. The cover 118', in a preferred embodiment of the invention, is releasable/ openable by, for example, slidingly moving it along a path in a longitudinal direction of the coffee bean supply device 100, i. e. towards the front wall 115. In a further preferred embodiment of the invention said movement of the cover 118' is a movement against a biasing element (as, for example, a spring), which bias is capable of returning the cover to its "CLOSE" position, once the opening power is released. As already explained above, the invention is not restricted to moving the cover 118' in a sliding movement: Other types of moving the cover 118' (without a biasing spring or against a biasing spring) may be considered as, for example, a pivoting movement (e. g. in cases where the cover 118' covering the coffee bean delivery opening 117 is located at the coffee bean supply device's rear end side 115'), a turning movement, a movement by dividing the cover 118' in (for example) two parts which may be opened and closed by sliding, pivoting, turning etc,, a concertina-like folding movement, to name only a few of those.

An opening of the coffee bean supply device's upper refill opening 112 and/or of the coffee beans supply device's lower coffee bean delivery opening 117 may be effected, in a preferred embodiment which is realized alone or together with one or several or all other features of the invention, against the bias of a respective retaining spring 135, 136. When one of the coffee bean supply device's upper refill opening and/or coffee bean supply device's coffee bean delivery opening functions of opening is actuated, e. g. by inserting a coffee bean supply device 100 of the invention into the coffee bean supply device receiving opening 324 or by inserting a coffee bean supply device 100 into a coffee brewing apparatus' coffee bean supply device receiving means 205, the insertion step may actuate at once, or may later be followed by, the step of opening the upper refill opening 112 or the step of opening the coffee bean delivery opening 117 against the power of a biasing retaining spring 135 or 136. Said retaining springs 135, 136 are capable of moving the upper refill opening 112 or the coffee bean delivery opening 117 back into the closed position, once the coffee bean supply device 100 is again withdrawn from the coffee bean loading space 316 or from the coffee brewing apparatus 200.

In preferred embodiments of the invention which are realized alone or together with one or several or all features of the invention, the inner volume or inner space 120 of the coffee bean supply device's housing 110 is fixed. This is, for example, shown in Figures 1A and 1B, where the whole volume or space surrounded by the walls of the housing 110 can be filled with coffee beans in any conceivable amount (and also in any predetermined amount) of coffee beans equal to (or smaller than) the volume or inner space 170 surrounded by the walls. Hence, the term "fixed inner volume" comprises the case of the whole (unchangeable) inner volume (as shown in Figures 1A and 1B) and comprises the cases of a fixed partial volume not changeable by any means and of a fixed partial volume which might be changed but, after the change, remains fixed at a predetermined level for a certain time or a certain number of coffee brewing procedures.

As shown in Figure 4, the coffee bean supply device's housing 110, in another even more preferred embodiment which may be realized alone or together with one or several or all features of the invention, has a variable inner volume 120. A variability of the coffee bean supply device's inner volume 120 may be desired in cases where the amount of coffee beans delivered to the coffee brewing apparatus 200, e. g. to its coffee bean inlet 220, may vary upon the user's wish to obtain coffee beverages of different strengths or upon the user's wish to obtain two portions of one or two coffee beverages of identical or different strengths or having different amounts of brewed coffee, e. g. "espresso" and "espresso doppio".

A variable inner volume of the coffee bean supply device 100 and its housing 110 may, in one simple embodiment, be obtained by providing the coffee bean supply device 100 within its housing 110 with a volume partition means 130, as shown in Figure 4. The term "volume partition means" as used in the present specification and claims is understood to mean a volume partition means fixedly accommodated within the inner volume of a space, e. g. in the inner space (or volume) 120 of the coffee bean supply device's housing 110. The term "fixedly accommodated", as used in the present specification and claims in this context is understood to mean that the volume partition means, once assembled to the inner space or volume of said element (e. g. the to the inner space 120 of the coffee bean supply devices housing 110), can no longer be moved, but permanently divides the volume or space into subspaces. Such a case is considered to be advantageous, because the user, when selecting the coffee bean amount to be loaded to the coffee bean supply device 100, may select different amounts of coffee beans sufficient for brewing one portion or more than one portion, for example two portions of a coffee beverage.

The volume partition means 130 may take a number of different shapes which a skilled person knows for dividing a surrounded volume or space 120 into subspaces, and such means may be selected by a skilled person in accordance with the requirements of a specific case. As (non-restricting) examples, such variable volume partition means may be material blocks (as shown in Figure 4), baffles, partition walls (as explained in more detail below and shown in Figure 4), meshes or nets.

In another preferred embodiment of the invention which may be realized alone or together with one or several or all other features of the invention, the volume partition means may be a variable volume partition means 134. The term "variable volume partition means" as used in the present specification and in the claims is understood to mean that the variable volume partition means, once assembled to the inner space or volume of a space element (e. g. the to the inner space 120 of the coffee bean supply devices housing 110), can be varied in its position together with, or independent of, the volume provided for amount of coffee beans sufficient for brewing one portion or more than one portion, for example two portions, of a coffee beverage. This is advantageous, because the user, in addition to selecting amounts of coffee beans sufficient for brewing one or more than one portion of coffee beverage(s), may also select the amount of coffee beans sufficient for brewing one or more than one portion of light, average or strong coffee beverage(s).

In the preferred embodiment shown in Figure 4, which may be realized alone or together with one or several or all features of the invention, the variable volume partition means 134 is a block of a material which is lightweight, stable in its dimensions, durable over a long period of time, and is compatible with food (in general) and with coffee beans especially. The material preferably is the same as the material of which the coffee bean supply device is made. Particularly preferred materials are metals, wood, glass, rigid organic polymers, and rigid organic polymers line polyethylene, polypropylene blends and copolymers thereof, and polycarbonate are preferred, without restricting the invention to those. The same basically applies to the materials of which volume partition means 130 of the invention are made.

The block 134 shown in Figure 4 as the variable volume partition means 134 may be moved, preferably may be slided, along the longitudinal axis of the coffee bean supply device 100 in two (vertical) directions, i. e. forth and back between the front 115 and rear 115' housing walls, thereby partitioning the inner space of the coffee bean supply device's housing 110 into a space (close to the coffee bean supply device's rear wall 115' und below the partial upper refill opening 112) to be filled with a predetermined amount of coffee beans in a later filling step (which will be described in detail below) indicated as the space "120" immediately adjacent to the coffee bean supply device's rear wall 115', and an (unused) space between the coffee bean supply device's front wall 115 and the proximal end of the block 134. By such a sliding movement of the block 134 towards the front wall 115 of the housing 110, the inner space or volume 112 is varied to be increased, and a longitudinal movement into the other direction (towards the rear wall 115' of the housing 110), the inner space or volume 120 is varied to be reduced.

In a subsequent coffee bean (re-)filling step described in more detail below, the coffee bean supply device housing's variable inner volume/space 120 obtained is filled with coffee beans, the amount of which is the larger, the larger the variable volume or space 120 is, i. e. the further the block 134 is slided towards the front wall 115 of the housing 110.

As will be described below, the coffee bean delivery opening 117 shown in Figure 4 serves as an opening allowing a delivery of coffee beans contained in said coffee bean supply device 100 to a coffee brewing apparatus 200, preferably to a coffee bean inlet 220 of a coffee brewing apparatus 200. In a later coffee bean delivery step (see the detailed description of the coffee brewing process below), the predetermined amount of coffee beans is delivered from the variable inner volume 120 of the coffee bean supply device's housing 110, through the coffee bean delivery opening 117 at the rear part of the bottom wall 116 of the housing 110, to the coffee brewing apparatus 200, preferably to the coffee brewing apparatus' coffee bean inlet 220, thereby being capable of (a) controlling the strength of the coffee beverage brewed; and/or being capable of (b) controlling whether one portion or two portions of a coffee beverage are brewed.

In preferred embodiments of the invention which are realized alone or together with one or several or all features of the invention, the inner volume or inner space 120 of the coffee bean supply device's housing 110 is capable of being partitioned into at least two fixed or variable volumes by at least one volume partition means 134. There may be one partition means 134, or there may be several, e. g. two or three or even four partition means 134. Depending upon the specific case and its requirements, a skilled person may select the number and the types of partition means 134 without being restricted by the present invention. As (non-restricting) examples, such variable volume partition means may be material blocks, baffles, partition walls (as explained in more detail below), meshes or nets. In particularly preferred embodiments of the invention, a skilled person may select at least one volume partition wall 134 and may select exactly one partition wall 134 in utmost preferred embodiments of the invention.

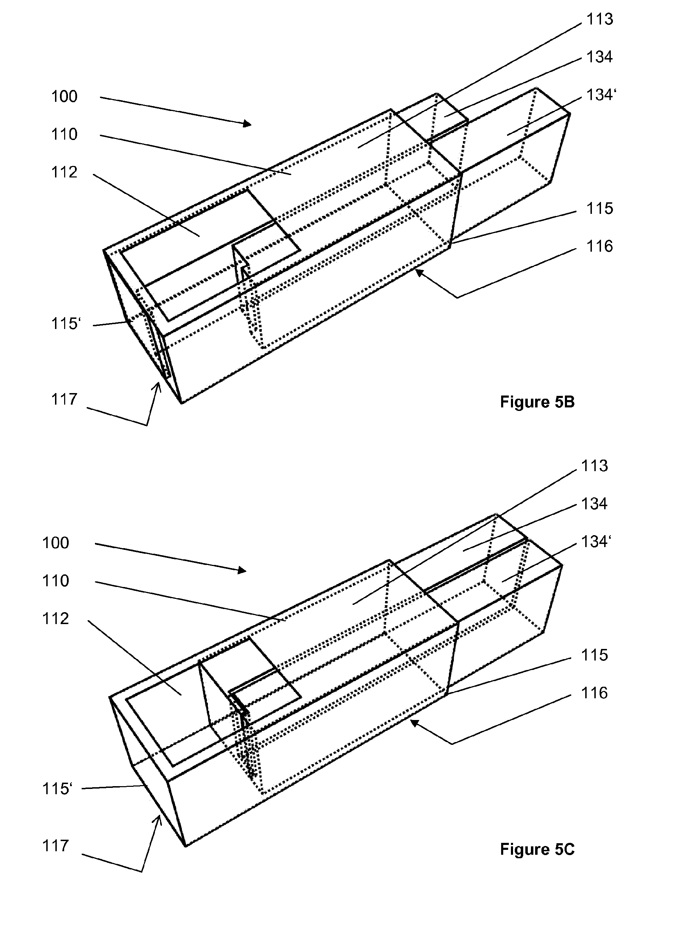

For an exemplary description of this preferred embodiment, reference is made to Figures 5A, 5B and 5C which show successive views of the exemplary box-shape coffee bean supply device 100 of the present invention comprising variable volume partition means 134. Figures 5A, 5B and 5C show the coffee bean supply device 100 according to the invention with its top, front and bottom walls 113, 115, 116 contributing to surrounding the coffee bean supply device's inner space or volume 120 and forming its housing 110. As described also in relation to Figure 4 above, the rear part of the coffee bean supply device's top wall 113 includes the partial upper (refill) opening 112. In Figure 5A, the housing's inner volume or inner space 120 is completely "blocked" by two variable volume partition means 134, 134' the distal ends of which are seen in Figure 5A through the (uncovered) partial upper (refill) opening 112 of the coffee bean supply device 100 and the proximal ends of which protrude from the coffee bean supply device's front wall 115.

As shown in Figure 5B, with the aim of providing a predetermined coffee bean amount for a subsequent delivery (through the coffee bean delivery opening 117 shown in Figures 5A, 5B and 5C indirectly, only) to a coffee brewing apparatus 200, especially to a coffee brewing apparatus coffee bean inlet 220, one of the variable partition means 134 is withdrawn from the coffee bean supply device 100 by a predetermined distance and away from the coffee bean supply device housing's rear wall 115', thereby opening a space of predetermined size in the inner volume or inner space 120 of the coffee bean supply device's housing 110. The amount of coffee beans which may be filled into this space was secured to be "a predetermined coffee bean amount" sufficient for one portion/serving of a coffee beverage of a certain strength. Similar "test brewings" secure "predetermined coffee bean amounts" for stronger or less strong brewings of one portion/serving of the coffee beverage.

Similarly, Figure 5C shows that, with the aim of providing a predetermined coffee bean amount for a subsequent delivery (through the coffee bean delivery opening 117) to a coffee brewing apparatus 200, especially to a coffee brewing apparatus coffee bean inlet 220, the other one of the variable partition means 134' is withdrawn from the coffee bean supply device 100 by a predetermined distance and away from the coffee bean supply device housing's rear wall 115', thereby opening a second space of predetermined size in the inner volume or inner space 120 of the coffee bean supply device's housing 110. The distance by which the second variable partition means 134' is withdrawn from the coffee bean supply device 100 may be the same as the withdrawing distance for the first variable partition means 134 or may be slightly different. Consequently, the second space may have the same size as the first one, thereby providing two substantially identical coffee bean portions resulting, when delivered to the coffee brewing apparatus, into two substantially identical coffee beverages, considering their amount and strength.

After having filled the spaces of the coffee bean supply device housing's inner space or inner volume and opened by withdrawing the variable partition means 134, 134' with coffee beans, the coffee beans are transferred to a coffee brewing apparatus, as will be described in more detail below, by opening the cover 118' of the coffee bean delivery opening 117 located at the rear part of the coffee bean supply device housing's rear part. The coffee beans will move to the coffee brewing apparatus by gravity, i. e. will fall into the coffee brewing apparatus' coffee bean inlet 220.

In preferred embodiments of the invention which are realized alone or together with one or several or all features of the invention, the inner volume or inner space 120 of the coffee bean supply device's housing 110 is capable of being partitioned into at least two fixed or variable volumes by at least one partition means 130. There may be one partition means 130, or there may be several, e. g. two or three or even four, partition means 130. Moreover, in further preferred embodiments which may be realized alone or together with one or several or all other features of the invention, the partition means are either fixed volume partition means 130 or are variable volume partition means 134. In further preferred embodiments of the invention, a variation of the partition means position may occur manually (e. g. by the user), as will be explained below) or may occur by actuation by any element of the coffee bean supply device 100 of the invention, of the coffee brewing apparatus 200 of the invention or of the coffee bean storage container 300 of the invention. Depending upon the specific case and its requirements, a skilled person may select the number and the types of partition means 130 and/or 134 without being restricted by the present invention.

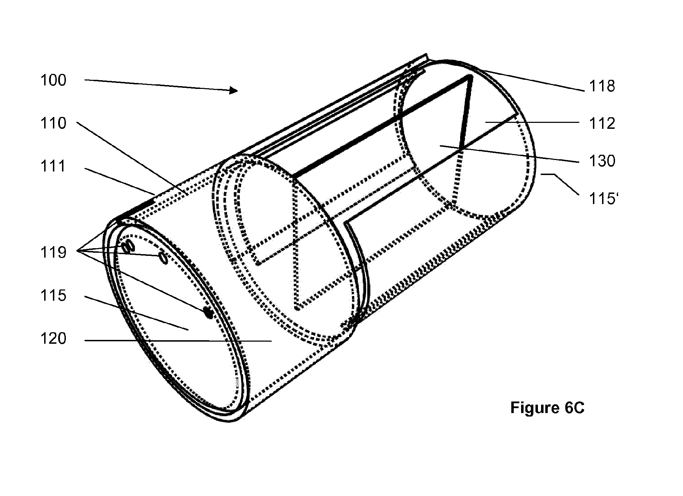

The exemplary embodiments of the invention where the partition means 130 is a partition wall or partition plane 130 are explained by referring to exemplary Figures 6A, 6B and 6C which show another (cylinder-shape) embodiment of a coffee bean supply device 100 of the invention. Particularly, the Figures 6A, 6B and 6C show that the partition wall or partition plane 130 is fixed within the inner space 120 of the coffee bean supply device's housing 110. Figures 6A, 6B and 6C show successive views of the exemplary cylinder-shape coffee bean supply device 100 of the present invention comprising fixed volume partition means 130 in the form of a fixed plane partition wall 130.

Figures 6A, 6B and 6C show the cylinder-shape coffee bean supply device 100 according to the invention with its one cylinder wall 111 surrounding the coffee bean supply device's inner space or volume 120 and, together with the front 115 and rear 115' walls, forming its housing 110. As described also in relation to Figure 1B above, the rear part of the coffee bean supply device's surrounding cylinder jacket-type wall 113 includes the partial upper (refill) opening 112. In Figure 6A, said partial upper opening 112 has the shape of a partial cylinder wall and is closed by a cover 118, also having the shape of a partial cylinder wall and being capable of being opened by sliding along the cylinder's surface.

As can further be seen from Figures 6A, 6B and 6C, the coffee bean supply device 100 is not provided with a lower side coffee bean delivery opening 117 for releasing coffee beans to a coffee brewing apparatus 200. As will be explained in detail below, in the case of the cylinder-shape coffee bean supply device 100 of Figures 6A, 6B and 6C (similar to Figure 1B), the release of coffee beans from the coffee bean supply device housing's inner volume or inner space 120 is effected via the partial upper (refill) opening 112 after turning the coffee bean supply device 100 upside down, when connected to, or integrated in, the coffee brewing apparatus 200 and its coffee bean inlet 220.

As shown in Figure 6A, inside the housing's rearside inner volume or inner space 120 (i. e. distal to the coffee bean supply device's front wall 115), there is accommodated a fixed plane partition wall 130, which is fixedly arranged in a vertical position to the longitudinal cylinder axis, if the cylinder of the coffee bean supply device 100 is in the position with its partial upper refill opening 112 centered on the upper side (as shown in Figure 6C). Hence, the plane partition wall 130 is positioned along, and under, the partial upper (refill) opening 112.

As is shown in Figures 6A, 6B and 6C, the coffee bean supply device housing's front wall has applied indicia 119 allowing to recognize the position of the fixed plane partition wall 130 and the position of the partial upper (refill) opening 112 for controlling the amount of coffee beans filled into the variable inner volume or inner space 120 of the coffee bean supply device's housing 110. In Figure 6A, the indicia 119 (exemplary combination of the cursor" |" on the cylinder wall's rim and of the "●" symbol on the front wall's surface) show the "CLOSED" position of the partial upper (refill) opening 112. Hence, no coffee beans can be filled into the coffee bean supply device 100 through the closed partial upper opening 112 thereof.

Continuing now to Figure 6B, it is shown that the partial upper (refill) opening's cover 118 experienced a partial slide, in a counterclock-wise direction in relation to the coffee bean supply device's circular front wall 115. For an exact control of the cover's slide, the indicia 119 (exemplary combination of the cursor"|" on the cylinder wall's rim and of the "○" symbol on the front wall's surface) show the position of "opening to position I". Correspondingly, the upper opening's cover 118 experienced a sliding movement into a partially opened position (as shown in Figure 6B) thereby clearing a cylinder sector for filling in coffee beans. Said sector is formed by one side the fixed plane partition wall 130 (in Figure 6B: the side facing the observer) and half the cylinder volume no longer covered by the cover 118. The amount of coffee beans which can be filled into this half cylinder volume is secured to be an amount sufficient for brewing one portion of a coffee beverage in a coffee brewing apparatus.

Continuing now to Figure 6C, it is shown that the partial upper (refill) opening's cover 118 experienced a further partial slide, in a counterclock-wise direction in relation to the coffee bean supply device's circular front wall 115. For an exact control of the cover's slide, the indicia 119 (exemplary combination of the cursor "|" on the cylinder wall's rim and of the "○○" symbol on the front wall's surface) show the position of "opening to position II ". Correspondingly, the upper opening's cover 118 experienced a further sliding movement into a fully opened position (as shown in Figure 6C) thereby clearing also the second cylinder sector for filling in coffee beans. Said sector is formed by the other side the plane partition wall 130 (in Figure 6c: the side away from the observer) and the other half the cylinder volume no longer covered by the cover 118). The amount of coffee beans which can be filled into this half cylinder volume is secured to be an amount sufficient for brewing two portions of a coffee beverage in a coffee brewing apparatus.

As shown in Figures 6A, 6B and 6C and described above, the indicia 119 on the coffee bean supply device's housing 110 or on one of its walls allow for manually varying the position of the coffee bean supply device upper refill opening cover 118. A skilled person will understand from the above description and from Figures 6A, 6B and 6C that also a variation control for an automated variation can be established with similar means and may select such means due to his/her skill in this technical field on the basis of the requirements of a specific case.

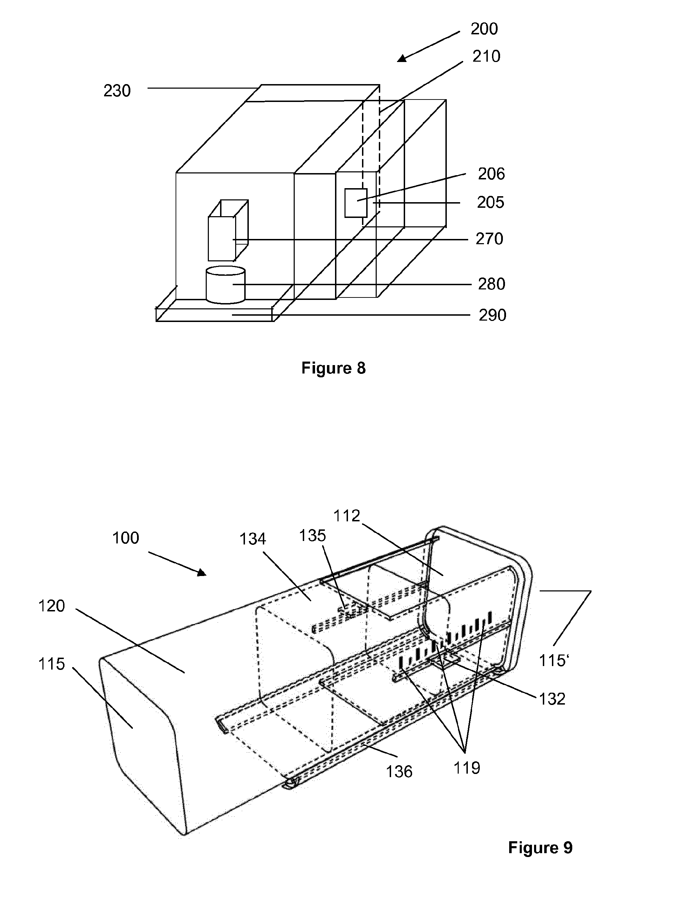

A further preferred embodiment of the invention, which may be realized alone or together with one or several or all other features of the invention, is shown in Figure 9. Figure 9 shows an embodiment similar to the embodiment shown in Figure 4, and some reference numerals therein were omitted for reasons of simplification.

An opening of the coffee bean supply device's upper refill opening 112 and/or of the coffee beans supply device's lower coffee bean delivery opening 117 may be effected, in a preferred embodiment which is realized alone or together with one or several or all other features of the invention, against the bias of a respective retaining spring 135, 136. When one of the coffee bean supply device's upper refill opening and/or coffee bean supply device's coffee bean delivery opening functions of opening is actuated, e. g. by inserting a coffee bean supply device 100 of the invention into the coffee bean supply device receiving opening 334 or by inserting a coffee bean supply device 100 into a coffee brewing apparatus' coffee bean supply device receiving means 205, the insertion step may actuate at once, or may later be followed by, the step of opening the upper refill opening 112 or the step of opening the coffee bean delivery opening 117 against the power of a biasing retaining spring 135 or 136. Said springs 135, 136 are capable of moving the upper refill opening 112 or the coffee bean delivery opening 117 back into the closed position, once the coffee bean supply device 100 is again withdrawn from the coffee bean loading space 316 or from the coffee brewing apparatus 200.

In the inventive embodiment shown in Figure 9, the coffee bean supply device 100 comprises a volume partition means 134 (shown as a box-shape rectangular block) which is capable of being slided in the inner space 120 of the coffee bean supply device housing 110 along the longitudinal direction of the coffee bean supply device 100. By sliding the volume partition means 134 towards the coffee bean supply device's front wall 115 (and away from its rear wall 115'), the rear volume within the coffee bean supply device's inner housing 110 is widened for receiving an increasing amount of coffee beans to be filled in via the coffee bean supply device's upper (refill) opening 112 (shown in Figure 9 to be open).

The sliding action can be performed by the user manually by moving the element 132 for manually moving the partition means 134 which is fixedly connected to the partition means' sidewall or even is made integrally with the partition means and protruding through a linear channel parallel to the partition means' moving direction longitudinally, where it may be gripped by the user for manually actuating the partition means' movement. Along the linear channel, there may be applied indicia 119 representing a distance of the partition means' linear movement and, considering the volume of the space towards the coffee bean supply device's rear wall 115', representing the volume capable to be filled with coffee beans manually from a coffee bean sales package or by means of the coffee bean storage container 300 of the invention. Depending upon the indicia's position selected by the user, relative to the manual movement element 132, the amount of coffee beans which can be filled into this half cylinder volume is secured to be an amount sufficient for brewing one or two portions of a coffee beverage in a coffee brewing apparatus. In this preferred embodiment of the invention, the strength of the coffee beverage(s) can also be selected by varying the amount of coffee beans to be slightly larger or slightly smaller than the amount of coffee beans for brewing a coffee beverage of an average strength. In the case shown in Figure 9, the indicia 119 may have the meaning of, for example "Zero position" - "one portion of a coffee beverage having low strength" - "one portion of a normal coffee beverage" - "one portion of a strong coffee beverage" - "two portions of a coffee beverage having low strength"-"two portions of a normal coffee beverage" - "two portions of a strong coffee beverage", without restricting the invention.

As already mentioned above, a skilled person may select, for the step of moving the variable volume partition means 134 manually by means of the element 132, a step of moving the variable volume partition means 134 automatically. In this case, the indicia 119 may be omitted or may serve as an (optical mechanical) indicator of the variable volume partition means' position within the inner space 120 of the coffee bean supply device's housing 110.

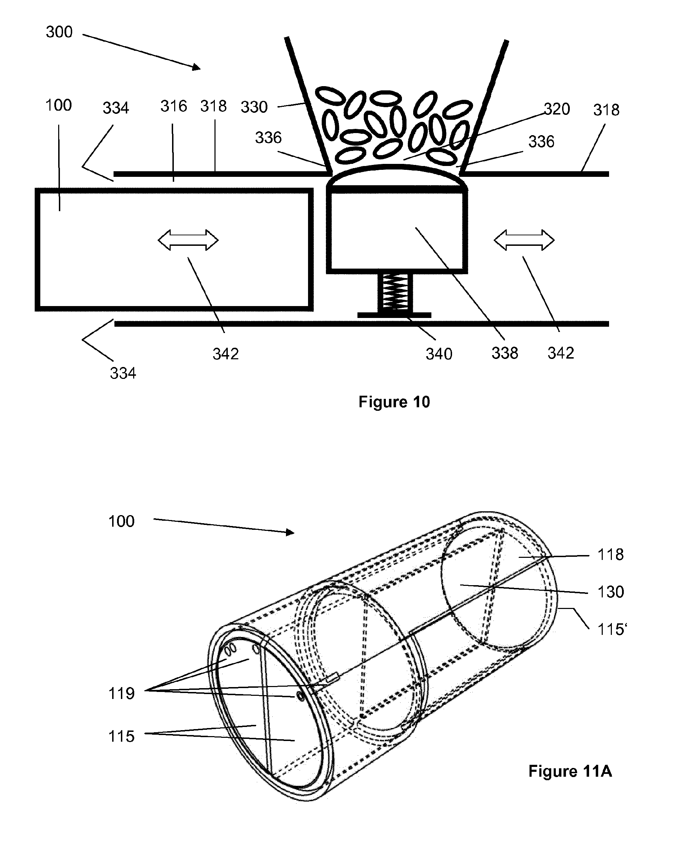

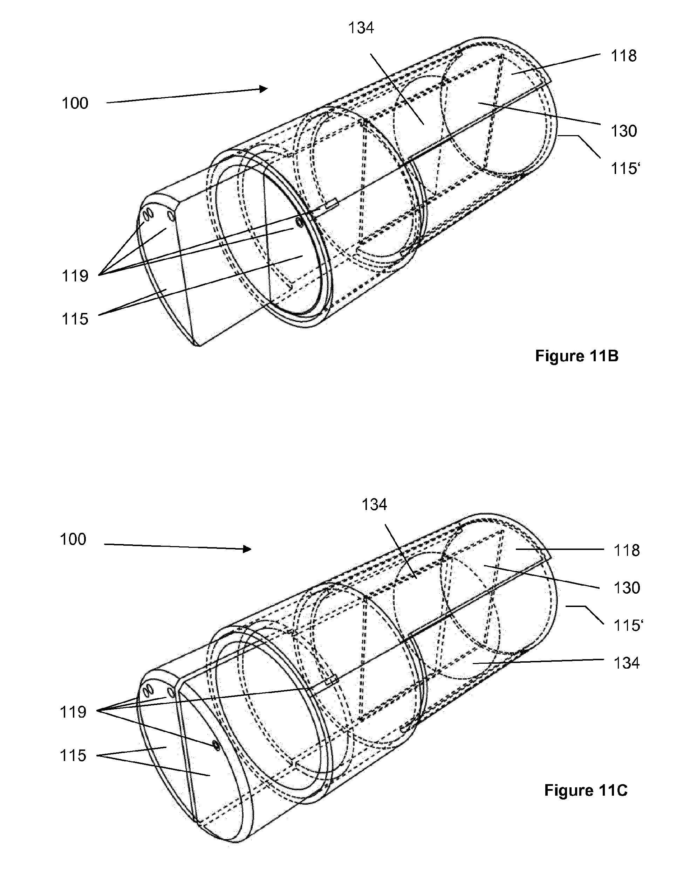

Reference is now made to Figures 11A, 11B and 11C, which Figures resemble Figures 6A, 6B and 6C, but supplement the fixed volume partition means 130, i. e. the plane plate 130 fixed vertically in the center of the cylinder shape coffee bean supply device 100 and partitioning the cylinder shape inner volume 120 of the coffee bean supply device's housing 110 into two half-cylinders, by variable volume partition means 134. To simplify the drawings of Figures 11A, 11B and 11C, the coffee bean supply device's upper refill opening is closed by a closure or cover 118, in all three Figures.

The inner space of the coffee bean supply device's housing 110 is fixedly divided into two half cylinders volumes by the volume partition means 130 (see Figures 11A, 11B and 11C). In this respect, Figure 11A closely resembles Figure 6A in showing a basic stage.

With the cover 118 of the upper refill opening 112 remaining closed (indicia 119 remaining in the "CLOSED" position: exemplary combination of the cursor"|" on the cylinder wall's rim and of the "●" symbol on the front wall's surface), one variable volume partition means 134 in the shape of a semi-cylinder volume placeholder (in the case shown in Figure 11 B: the "Western" semi-cylinder) is withdrawn from the coffee bean supply device 110 in an axial direction, thereby clearing a semi-cylinder volume space defined by the coffee bean supply device's semi-circular rear wall 115', a rectangular portion of the fixed partition means 130, a bent part of the cylinder's jacket and the rear side of the semi-cylinder 134. This space is ready for being filled with coffee beans, as soon as the coffee bean supply device's rear end is placed either under the opening of a coffee bean sales package or under the coffee bean storage container's coffee bean loading gate 320. The amount of coffee beans loaded may vary in accordance with the distance by which the semi-cylinder is withdrawn from the coffee bean supply device' housing 110 and may determine the strength of the one portion of a coffee beverage brewed from said coffee beans.

Continuing to Figure 11C, with the cover 118 of the upper refill opening 112 still remaining closed, the other variable volume partition means 134 in the shape of a semi-cylinder volume placeholder (in the case shown in Figure 11C: the "Eastern" semi-cylinder) is also withdrawn from the coffee bean supply device 110 in an axial direction, thereby clearing another semi-cylinder volume space defined by the coffee bean supply device's semi-circular rear wall 115', a rectangular portion of the fixed partition means 130, a bent part of the cylinder's jacket and the rear side of the second semi-cylinder. This space is ready for being filled with coffee beans, too, as soon as the coffee bean supply device's rear end is placed either under the opening of a coffee bean sales package or under the coffee bean storage container's coffee bean loading gate 320. The amount of coffee beans loaded may vary, to an extent identical to or similar to or different from the extent of variation of the first semi-cylinder, in accordance with the distance by which the second semi-cylinder is withdrawn from the coffee bean supply device' housing 110 and may determine the strength of the second portion of a coffee beverage brewed from said second amount of coffee beans.

In both cases (i. e. of Figure 11B and Figure 11 C), the amounts of coffee beans which can be filled into these half cylinder volumes is secured to be an amount sufficient for brewing either one portion or two portions of a coffee beverage in a coffee brewing apparatus, whereby both portions of a coffee beverage may be varied with respect to their strength.

As shown in Figures 11A, 11B and 11C and described above, the indicia 119 on the coffee bean supply device's housing 110 or on one of its walls allow for manually varying the position of the coffee bean supply device's upper refill opening cover 118. A skilled person will understand from the above description and from Figures 11A, 11B and 11C that also a variation control for an automated variation can be established with similar means and may select such means due to his/her skill in this technical field on the basis of the requirements of a specific case.

As will be explained in detail below, the coffee bean supply device 100 as described in detail above, after filling it (manually from a stock contained in a coffee beans sales package or by means of the coffee bean storage container 300 according to the invention described in detail below) with coffee beans will be connected with, or inserted into, a coffee brewing apparatus 200, with the aim of delivering a predetermined amount of coffee beans suitable for brewing one or two portions of a coffee beverage at a time to said coffee brewing apparatus 200. In accordance with the invention and its preferred embodiments, which are realized alone or together with one or several or all other features of the invention, for the above purposes, the coffee bean supply device 100 is provided with means for manually moving the device 100 or - even in more preference due to the advantages achieved - is provided with means for manually or automatically withdrawing, e. g. withdrawing the device 100 from the coffee bean storage container 300 after loading or withdrawing the device 100 from the coffee brewing apparatus 200 after supplying coffee beans to the coffee brewing apparatus' coffee bean inlet 220; for manually or automatically inserting, e. g. inserting the device 100 into the coffee bean container 300 of the invention for loading coffee beans or inserting the device 100 for loading the coffee beans into the coffee brewing apparatus 200; for manually or automatically turning, e. g. turning the device for loading coffee beans manually into the device 100 or for turning the device for loading coffee beans into the coffee brewing apparatus 200 via the same opening as the one through which the coffee beans were loaded (e. g. in the cases of the cylinder shape coffee bean supply devices 100); pushing the device (e. g. pushing the coffee bean supply device 100 into the loading space 316 of the coffee bean storage container 300 of the invention by transiently displacing the pushing disclosure element 338); or opening and/or closing the device 100, e. g. opening or closing the device 100 as the terminal step of loading coffee beans; and/or loading the device with coffee beans, e. g. either manually from a coffee bean sales package or by means of the coffee bean storage container of the invention, as will be described below.

In accordance with another aspect of the invention, there is provided a new coffee brewing apparatus 200 to which the coffee bean supply device 100 of the present invention and as described above in detail with reference to Figures 1 to 6 can be connected.

In accordance with the invention, and also as known from the prior art, as shown in Figure 3, the new coffee brewing apparatus 200 comprises the following functional elements:
- a water storage container 230, said water storage container being capable of storing and holding water and of supplying it via a water inlet 235 to a water heating means (238) for heating the water for brewing coffee;
- a coffee bean passageway 240 connecting a coffee bean inlet 220 to a coffee bean grinding means or mill 250;
- a coffee grounds passageway 255 connecting the mill 250 to a coffee brewing unit 260;
- the coffee brewing unit 260 where fresh coffee is brewed from the coffee grounds supplied by the coffee grounds passageway 255 and the from hot water supplied by a water conveying means from the water heating means 238;
- a brewed coffee beverage outlet 270 filling the freshly brewed coffee into a drinking receptacle 280; and
- a depleted coffee discharge container 290.

In accordance with the invention, said coffee brewing apparatus 200 further comprises a coffee bean supply device receiving means 205 connected to, or integrated in the coffee brewing apparatus 200 and capable of receiving at least one coffee bean supply device 100 as described in detail above in an arrangement allowing a supply of coffee beans to the coffee brewing apparatus' coffee bean inlet 220 for brewing coffee.

The coffee brewing apparatus 200 of the invention is suitable for, and is intended to be operated, on a professional use level and on a private (household) level as well.

The coffee bean supply device receiving means 205 connected to, or integrated in, the coffee brewing apparatus 200 may be capable of receiving one coffee bean supply device 100 or may be capable of receiving more than one, e. g. two, three or even four coffee bean supply device(s) 100. In preferred embodiments of the invention which may be realized alone or together with one, several or all other features of the invention, the coffee bean supply device receiving means 205 connected to the coffee brewing apparatus 200 is capable of receiving one or two or three coffee bean supply device(s) 100. In even more preferred embodiments of the invention, the coffee bean supply device receiving means 205 connected to the coffee brewing apparatus 200 is capable of receiving one coffee bean supply device 100.

In preferred embodiments of the invention which may be realized alone or together with one, several or all other features of the invention, because they provide more choices to the user when brewing coffee, the coffee brewing apparatus 200 of the present invention may further comprise a coffee bean storage container 210 (also called: a "regular" coffee bean storage container 210 in the present specification), which is capable of storing and holding coffee beans and of supplying them via a coffee bean inlet 220 to the coffee brewing apparatus 200 for brewing coffee. Such a "regular" coffee bean storage container 210 conventionally contains a stock of coffee beans for several portions of freshly brewed coffee beverages and is capable of supplying them to the coffee brewing apparatus' coffee bean inlet. However, in contrast to conventional coffee brewing apparatus 200 where such a "regular" coffee bean storage container 210 is essential, a "regular" coffee bean container 210 containing a stock of coffee beans may be omitted in the coffee brewing apparatus 200 of the invention because, basically, the coffee brewing apparatus 200 of the present invention may receive all coffee beans for brewing via the coffee bean supply device 100 of the present invention.

The coffee brewing apparatus 200 of the present invention which includes the additional "regular" coffee bean storage container 210 is exemplarily and schematically shown in Figure 8. The coffee bean supply device receiving means 205 is shown in Figure 8 together with a regular coffee bean storage container 210, which is a preferred embodiment of the invention.

If, as shown in Figure 8, the coffee brewing apparatus 200 of the invention comprises the "regular" coffee bean container 210, a supply of coffee beans from the "regular" coffee bean container 210 and a supply of coffee beans by means of the coffee bean supply device 100 of the invention via the coffee bean supply device receiving means 205 may be effected independently of each other, although, in both cases, the coffee beans for brewing a coffee beverage are supplied via the same part of the coffee brewing apparatus 200, i. e. via the coffee brewing apparatus' coffee bean inlet 220. It is noted here that, once a supply of coffee beans to the coffee brewing apparatus 200 by means of the coffee bean supply device 100 of the invention is effected by inserting the coffee bean supply device 100 into the coffee bean supply device receiving opening 206 of the coffee bean supply device receiving means, a supply of coffee beans from the "regular" coffee bean storage container 210 will no longer be possible until to the moment of starting another (new) coffee brewing process for which coffee beans are intended to be supplied by the regular coffee bean storage container 210. On the other hand, once a coffee brewing procedure is started by selecting a supply of coffee beans from the regular coffee bean storage container 210, a supply of coffee beans for a coffee brewing procedure via the coffee bean supply device 100 of the present invention will no longer be possible until to the moment of starting another (new) coffee brewing process for which coffee beans are intended to be supplied by the coffee bean supply device 100 of the invention. In this context, it might even be possible to set up the coffee brewing apparatus 200 of the present invention (in case that a regular coffee bean storage container is available) in such a manner that, as long as a coffee bean supply device 100 of the invention is connected to, or integrated in, the coffee bean supply device receiving opening 206 of the coffee bean supply device receiving means 205, the coffee will be brewed from coffee grounds obtained by milling those coffee beans supplied by the coffee bean supply device 100 of the present invention. On the other hand, if no coffee bean supply device 100 of the invention is connected to, or integrated in, the coffee bean supply device receiving opening 206 of the coffee bean supply device receiving means 205, the coffee will be brewed from coffee grounds obtained by milling coffee beans obtained from the regular coffee bean container, as soon as a coffee brewing process is started.

However, the presence of the additional "regular" coffee bean storage container 210 in a combined structure with the coffee bean supply device receiving means 205 is not essential, and the additional "regular" coffee bean storage container 210.may be omitted so that the coffee brewing apparatus 200 of the present invention can be made capable of receiving all coffee beans for brewing a coffee beverage from the coffee bean supply device 100 of the present invention. Moreover, if a "regular" coffee bean storage container 210 is present (as in the preferred embodiment of the coffee brewing apparatus 200 of the invention shown in Figure 8), the "regular" coffee bean storage container 210 may be provided in connection to the coffee brewing apparatus 200 at a different location, e. g. the one shown in Figure 2.

As shown in Figure 8, the coffee bean supply device receiving means 205 provided at the coffee brewing apparatus 200 of the invention has a receiving opening 206 capable of receiving the coffee bean supply device 100 for delivering coffee beans to the coffee brewing apparatus 200, especially to the coffee brewing apparatus' coffee bean inlet 220 (not shown). In a preferred embodiment (and as shown exemplarily in Figure 8), the coffee bean supply device receiving opening 206 intended to receive the coffee bean supply device 100 of the invention is provided at an upper front panel part of the coffee bean supply device receiving means 205. This is advantageous because the coffee beans delivered may move to the coffee brewing apparatus' coffee bean inlet 220 by gravity, i. e. substantially downwards.

For achieving the same aim, i. e. delivering the coffee beans from the coffee bean supply device's coffee bean delivery opening 117 to the coffee brewing apparatus' coffee bean inlet 220 from a position allowing the coffee beans to move to the coffee brewing apparatus' coffee bean inlet 220 by gravity, i. e. substantially downwards, the coffee bean supply device receiving opening 206 may be located - in alternative and also preferred embodiments - at the top panel or at the rear panel or at the outer side panel of the coffee bean supply device receiving means 205 of the coffee brewing apparatus 200 of the invention and may be located - in even more preferred embodiments, if located at the rear panel or at the outer side panel of the coffee bean supply device receiving means 205 - at their respective upper parts.

The receiving opening 206 is shown in Figure 8 to have a rectangular (square) structure, which structure is not restricting the invention: The shape of the receiving opening may also be circular or may have any other structure; it has to be adapted to the structure of the coffee bean supply device 100 of the invention.

Furthermore, the coffee bean supply device receiving means 205 may be provided with a channel structure (not shown in Figure 8) enabling the coffee bean supply device receiving means 205 to receive the coffee bean supply device 100 and to deliver the coffee beans to the coffee bean inlet 210 of the coffee brewing apparatus 200. Such a channel structure will also be adapted to the structure, shape, size and functions of the coffee bean supply device 100 of the invention to be used for supplying coffee beans. In exemplary embodiments, the channel structure will have rectangular or circular shape, depending upon the shape of the coffee bean supply device used. Furthermore, the channel structure will provide for means allowing actuating an opening of the coffee bean supply device's coffee bean delivery opening 117 in the step of releasing the predetermined amount of coffee beans from the coffee bean supply device 100. Moreover, the coffee bean supply device receiving means 205 will provide for guiding the coffee beans released from the coffee bean supply device 100 to the coffee brewing apparatus' coffee been inlet 210, for example (but not restricting) for a chute or channel allowing the coffee beans to move by gravity from the coffee bean supply device 100 to the coffee brewing apparatus' coffee bean inlet 220.

As one of the problems to be solved by the present invention resulting from the fact that the coffee brewing apparatus 200 is capable of successively brewing coffee from different types of fresh coffee beans according to the user's preference, e. g. (without restriction) from customized origin coffee beans and/or from customized roastings of coffee beans and/or from customized blends of coffee beans, it was considered essential that, after terminating the step of brewing coffee from one certain type of coffee beans, supplied coffee beans and/or coffee grounds from the previous delivery, milling, transport and brewing steps are no longer found in the brewing operation area (i. e. in the coffee bean inlet 201, in the passageway guiding the coffee beans to the mill 250, in the coffee grounds passageway 255 and in the coffee brewing unit 260) of the coffee brewing apparatus. In the prior art, particularly coffee beans delivered to the mill 250 and not ground and coffee grounds not used for brewing coffee in the coffee brewing unit prevented the freshly supplied coffee beans according to the user's wish from being employed in the coffee brewing process, actually. It was eagerly intended that this disadvantage be remediated in the coffee brewing apparatus 200 of the present invention. Several measures were already provided, to this end, by the Applicants' earlier European patent application No. 15182506.4, the whole content of which is incorporated by reference into this application.

Hence, in further preferred embodiments of the invention which may be realized alone or together with one, several or all other features of the invention, the coffee brewing apparatus 200 is capable of conducting the step of milling coffee beans in the coffee brewing apparatus' mill 250, until all coffee beans supplied to the coffee brewing apparatus mill 250 are ground to coffee grounds and the coffee grounds are guided to the coffee brewing unit 260 and employed for brewing coffee from those freshly supplied coffee beans desired by the user and, hence, entered into the brewing process by using the coffee bean supply device 100 and the coffee brewing apparatus 200 of the present invention. Practically, this can be achieved by suitably controlling the operation of the mill, e. g. by controlling the power consumption of the milling operation, which is reduced as soon as no further coffee beans are entering the mill. Hence, if such power consumption reduction of the mill 250 is detected, e. g. by observing such a reduction by a corresponding measurement, or by a digital detection of such power consumption reduction, the mill driving means/motor is switched off, thereby stopping the coffee bean milling step.

In an alternative embodiment (similarly preferred), which may be realized alone or together with one, several or all other features of the invention, the coffee brewing apparatus 200 is capable of controlling the duration of the step of milling coffee beans in the coffee brewing apparatus' mill 250 by the coffee brewing apparatus' recognizing the position of the coffee bean supply device's mechanical indicia 119 of the delivered coffee bean amount. The position of such indicia 119 is shown - exemplarily and without restricting the invention - in Figure 9, in Figures 6A, 6B and 6C and in Figures 11A, 11B, 11C and may be located at any of the coffee bean supply device's walls, at any of the elements of the coffee bean supply device 100, e. g. at one or more of the elements of the coffee bean supply device 100 determining the amount of coffee beans delivered, or both in combination (the latter being shown in Figures 6A, 6B and 6C explained above). Said position of the indicia 119 (relating to the coffee bean amount filled into the coffee bean supply device 100) can be made mechanically recognizable and may allow the coffee brewing apparatus to recognize the predetermined amount of coffee beans contained in the coffee bean supply device 100 of the invention. For any of those few different amounts of coffee beans, the coffee brewing machine will recognize the mechanical position of the indicia 119 and will convert it into a suitable milling duration signal sent to the power supply for the mill 250. Hence, the mill will automatically be switched off as soon as the relevant milling period has passed.

A skilled person will be aware of other measures allowing to control the milling process until all coffee beans supplied by the coffee bean supply device 100 (or by any additional coffee bean storage container 210) are milled to coffee grounds, and will select suitable measures in accordance with the requirements of a specific case.

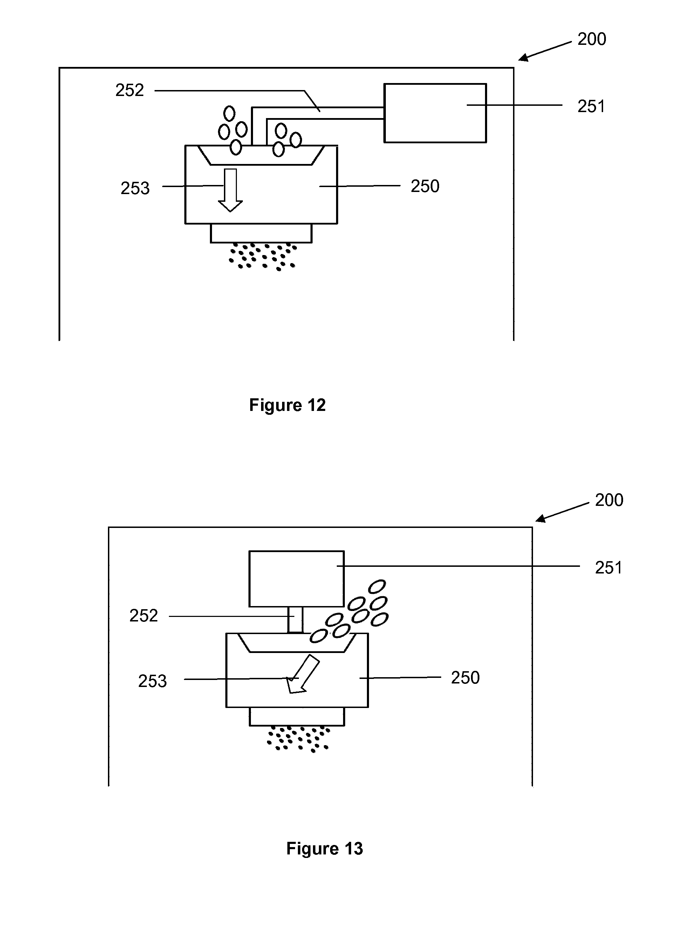

In a preferred embodiment of the invention, which may be realized alone or in combination with one or several or all other features of the invention, the coffee brewing apparatus 200 of the invention has its coffee bean grinding means or the mill's driving means 251 arranged above the coffee bean grinding means or mill 250, as shown in Figure 13, or alternatively, the coffee brewing apparatus 200 of the invention has its coffee bean grinding means or mill's driving means 251 arranged laterally to the coffee bean grinding means or mill 250, as shown in Figure 12. In both cases, the driving means 251 is connected to the mill 250 via suitable transmission means or gear trains 252. Hence, the mill 250 or its drive means 251 do not prevent the coffee beans (and the coffee grounds as well) to move downwards by gravity, as is shown in Figures 12 and 13 by the directional arrows 253. This is effected especially either by (a) moving the coffee beans due to gravity into the mill 250, if the mill driving means (motor) 251 is located laterally to the mill 250, as shown in Figure 12; or by moving the beans by guiding them on a horizontal, but steeply sloping passageway, if the mill driving means (motor) 251 is located above the mill 250, as shown in Figure 13.

In a further aspect, the invention also relates to a coffee bean storage container 300 capable of supplying and metering coffee beans from a coffee bean stock in a storage space 310 of the container 300 to a coffee bean supply device 100 as in detail described above and connected to the container 300. Such a coffee bean storage container 300 of the invention comprises, below the storage space 310 surrounded by at least one closed wall 312, a loading space 316 accessible via a coffee bean supply device receiving opening 334 and capable of receiving at least one coffee bean supply device 100 as described above in detail. The coffee bean storage container 300 also comprises at least one intermediate separate wall 318 provided with at least one coffee bean loading gate 320, the position of the coffee bean loading gate 320 matching with the coffee bean supply device's coffee bean refill opening 112, thereby enabling a supply of coffee beans, upon opening the coffee bean loading gate 320, through the partial upper (refill) opening 112 of the coffee bean supply device housing 110, to the inner space of the coffee bean supply device 100 received in said coffee bean supply device receiving opening 334.

An opening of the coffee bean storage container's coffee bean loading gate 320 may be effected, in a preferred embodiment which is realized alone or together with one or several or all other features of the invention, against the bias of a retaining spring 321. When the coffee bean loading gate's opening function is actuated, e. g. manually by the user or by inserting a coffee bean supply device 100 of the invention into the coffee bean supply device receiving opening 334, the insertion step may actuate at once, or may later be followed by, the step of opening of the coffee bean loading gate 320 against the power of a biasing retaining spring 321. Said retaining spring 321 is capable of moving the coffee bean loading gate 320 back into the closed position, once the coffee bean supply device 100 is again withdrawn from the loading space 316 through the coffee bean supply device receiving opening 334.

Advantageously, by using such a coffee bean storage container 300 specialized to load coffee beans to the coffee bean supply device 100 of the invention, said coffee bean supply device 100 can be loaded (compared to loading it manually from a sale package containing coffee beans, which manual loading step is also possible in accordance with the present invention) more easily, and with few hand movements, while achieving a high reliability of a correct dosing of coffee beans into the coffee brewing step, not only in view of brewing one or two portions of a coffee beverage from the amount of coffee beans loaded, but also in view of the desired selectable strength of the two coffee beverage portions.

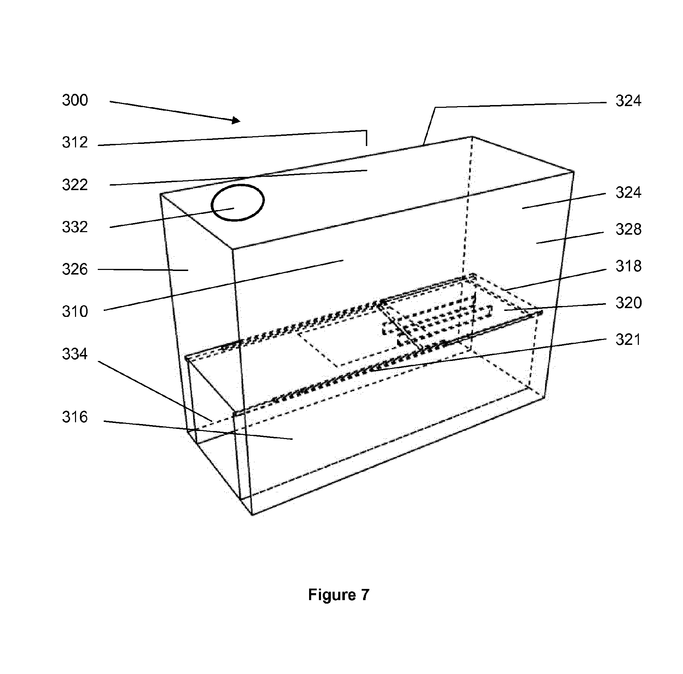

The coffee bean storage container 300 of the invention is shown in Figure 7, as a preferred (but not restricting) embodiment of the invention which may be realized alone or together with one, several or all other features of the invention. In said preferred embodiment (e. g. relating to a box-shape coffee bean supply device 100 as also shown in Figures 1A and 4), the at least one storage space closed wall 312 comprises an upper wall 322 optionally comprising a filling hole 332, two side walls 324, 324, a front wall 326, a rear wall 328 and the intermediate separate wall 318, wherein said front wall 326 comprises the receiving opening 334 in its lower part and wherein the intermediate separate wall 318 may be shaped as a funnel having its lowest point above the upper coffee bean loading gate 320 so as to allow a loading of coffee beans to a coffee bean supply device 100 due to gravity.

Figure 10 is showing more in detail a preferred embodiment of a coffee bean storage container 300 of the invention, and the features shown in Figure 10 may be realized alone or together with one or several or all other features of the invention. Figure 10 substantially shows the coffee bean storage container's loading space 316 including the coffee bean supply device receiving opening 334, the loading space intermediate separate wall 318 forming a funnel 330 at its bottom part, where the coffee beans move substantially by gravity. The lower end of the funnel 330 may preferably be closed by a pushing closure element 338 as shown in Figure 10: The upper arched side of the pushing closure element 338 abuts the lower (ring-shape) end of the funnel 330, thereby closing said lower funnel end and preventing coffee beans from escaping from the funnel 330 or jamming the closure area. The pushing closure element 338 is pressed against the lower end of the funnel 330 by means of a biasing retaining spring 340.

In order to prevent coffee beans from being jammed between the pushing closure element's upper arched side and the lower end of the funnel (which jamming would inhibit a sealed closing of the coffee bean loading gate 320), the pushing closure element 338, when abutting against the lower ring end of the funnel 330, for closing the passageway against, or opening the passageway for, a passage of coffee beans, is co-operating with an abutment means operated by the coffee bean storage container 300 and abuttingly pressed, and kept abutting, by means of the bias of the retaining spring 340, against the bottom side opening of the funnel, either directly or by mediation of a soft material-type lip 336 or bristle-type material lip 336. Surprisingly, a blocking of the bottom-side opening of the funnel 332 by coffee beans can be prevented reliably.

The same cooperation between an abuttingly pressing closure element and a soft material-type lip 336 or bristle-type material or lip 336 preventing coffee beans from jamming an opening to be closed by said (e. g.) pushing closure element can also be provided at the coffee bean supply device's upper refill opening 112 or at the coffee bean supply device's coffee bean delivery opening 117,

When opening the lower funnel passageway for, or closing the lower funnel passageway against, a passage of coffee beans to be loaded from the coffee bean storage container's storage space into the coffee bean supply device 100, the coffee bean supply device 100 enters into the loading space 316 via the coffee bean supply device receiving opening 334 in the direction shown by the directional movement arrow 342 and, when encountering the pushing closure element 338 closing the lower end of the funnel 330, displaces the pushing closure element 338 against the biasing power of a retaining spring (321 in Figure 7, not shown in Figure 10) and positions the coffee bean supply device's upper refill opening 112 under the lower end of the funnel and, specifically, under the coffee bean storage container's coffee bean loading gate 320.

After the appropriate amount of coffee beans has been loaded to the coffee bean supply device 100, the coffee bean supply device 100 is released from the loading space 316 by moving back into the direction shown by the directional movement arrow 342. Simultaneously, the pushing closure element 338 is moving back, in the direction shown by the directional movement arrow 342, due to the retaining spring's bias (321 in Figure 7, not shown in Figure 10) so as to close the lower end of the funnel 330 by abutting to the soft material-type lip 336 or bristle-type material lip 336. The closure closes safely, and no coffee beans are jamming the passage closed by the pushing closure element 338. As a skilled person will recognize, a similar coffee bean storage container 300 is designed for loading coffee beans to a coffee bean supply device 100 having a shape different from the box shape, e. g. having a cylinder shape, and a skilled person can select an appropriate coffee bean storage container 300 for loading coffee beans to such different shape coffee bean supply devices, e. g. to a cylinder shape coffee bean supply device 100, in accordance with the requirements of a specific case.

The invention also relates to a process of brewing coffee from coffee grounds obtained immediately before the brewing step from freshly ground coffee beans on an automatic coffee brewing apparatus (200), the process comprising the steps of
(a) providing for a coffee brewing apparatus 200 comprising a water storage container 230 capable of storing and holding water and of supplying it via a water inlet 235 to a water heating means 238 for heating the water for brewing coffee; a coffee bean passageway 240 connecting the coffee brewing apparatus' coffee bean inlet 210 to a coffee grinding means or mill 250; a coffee grounds passageway 255 connecting the mill 250 to a coffee brewing unit 260; the coffee brewing unit 260 where fresh coffee is brewed from the coffee grounds supplied by the coffee grounds passageway 255 and the hot water supplied by water conveying means from the water heating means 238; a brewed coffee beverage outlet 270 filling the freshly brewed coffee into a drinking receptacle 280; and a depleted coffee discharge container 290;
(b) filling a releasable detachable coffee bean supply device 100 as described above in detail with a type of desired coffee beans in a predetermined coffee bean amount sufficient for brewing at least one portion of a freshly brewed coffee beverage, preferably with customized origin coffee beans and/or customized roastings of coffee beans and/or customized blends of coffee beans;
(c) connecting the releasably detachable coffee bean supply device 100 filled in step (b) to, or integrate it in, said coffee brewing apparatus 200 and causing the filling of coffee beans in the coffee bean supply device 100 to move to the coffee bean apparatus' coffee bean inlet 220;
(d) starting the coffee brewing automated procedure on the coffee brewing apparatus 200, whereupon
(e) the coffee brewing apparatus 200 requests a supply of said predetermined amount of coffee beans from the coffee bean supply device 100
(f) to be delivered from the coffee bean supply device's housing inner space 120 and passing its coffee bean delivery opening 117
(g) to the coffee brewing apparatus' coffee bean inlet 220; and
(h) delivered via the coffee brewing apparatus' coffee bean passageway 240 to the coffee bean grinding means or mill 250 and further to the coffee brewing apparatus' coffee brewing unit 260;
(i) receiving a coffee beverage at the coffee brewing apparatus' brewed coffee beverage outlet 270; and optionally
(j) disconnecting the coffee bean supply device 100 connected in step (c) from said coffee brewing apparatus 200; and optionally
(k) refilling said detachable coffee bean supply device 100 as described above in detail and disconnected in step (j) above with selected coffee beans, connecting said coffee bean supply device 100 to, or integrate it in, the coffee brewing apparatus 200 and starting the coffee brewing automatic procedure on the coffee brewing apparatus 200 with steps (d) et seq. above.

In an alternative embodiment, the invention also relates to a process of brewing coffee from coffee grounds obtained immediately before the brewing step from freshly ground coffee beans on an automatic coffee brewing apparatus 200, the process comprising the steps of
(a) providing for a coffee brewing apparatus 200 comprising a water storage container 230 capable of storing and holding water and of supplying it via a water inlet 235 to a water heating means 238 for heating the water for brewing coffee; a coffee bean passageway 240 connecting the coffee brewing apparatus' coffee bean inlet 220 to a coffee grinding means or mill 250; a coffee grounds passageway 255 connecting the mill 250 to a coffee brewing unit 260; the coffee brewing unit 260 where fresh coffee is brewed from the coffee grounds supplied by the coffee grounds passageway 255 and the hot water supplied by water conveying means from the water heating means 238; a brewed coffee beverage outlet 270 filling the freshly brewed coffee into a drinking receptacle 280; and a depleted coffee discharge container 290;
(b) providing for a coffee bean storage container 300 as described above in detail and capable of supplying and metering coffee beans from a coffee bean stock in a storage space 310 of the container 300 to a coffee bean supply device 100 as described above in detail and connected to the coffee bean storage container 300, and filling the storage space 310 of the coffee bean storage container 300 with a type of desired coffee beans in an amount sufficient for brewing at least one portion of a freshly brewed coffee beverage, preferably with customized origin coffee beans and/or customized roastings of coffee beans and/or customized blends of coffee beans;
(c) filling a releasable detachable coffee bean supply device 100 as described above in detail with said type of desired coffee beans in a predetermined coffee bean amount sufficient for brewing at least one portion of a freshly brewed coffee beverage via the coffee bean storage container 300 by inserting at least one coffee bean supply device 100 as described above in detail into the coffee bean storage container's loading space 316 and allowing said predetermined amount of coffee beans to move from the coffee bean storage container 300 to the inner volume of the coffee bean supply device 100 ;
(d) connecting the releasably detachable coffee bean supply device 100 filled in step (c) to, or integrate it in said coffee brewing apparatus 200 and causing the filling of coffee beans in the coffee bean supply device 100 to move to the coffee bean apparatus' coffee bean inlet 220;
(e) starting the coffee brewing automated procedure on the coffee brewing apparatus 200, whereupon
(f) the coffee brewing apparatus 200 requests a supply of said predetermined amount of coffee beans from the coffee bean supply device 100
(g) to be delivered from the coffee bean supply device's housing inner space 120 and passing its coffee bean delivery opening 117
(h) to the coffee brewing apparatus' coffee bean inlet 220; and
(i) delivered via the coffee brewing apparatus' coffee bean passageway 240 to the coffee bean grinding means or mill 250 and further to the coffee brewing apparatus' coffee brewing unit 260;
(j) receiving a coffee beverage at the coffee brewing apparatus' brewed coffee beverage outlet 270; and optionally
(k) disconnecting the coffee bean supply device 100 connected or integrated in step (b) from said coffee brewing apparatus 200; and optionally
(l) refilling said detachable coffee bean supply device 100 as described above in detail and disconnected in step (k) above manually or by means of the coffee bean storage container 300 with selected coffee beans via the coffee bean storage device 300, connecting said coffee bean supply device 100 to, or integrate it in, the coffee brewing apparatus 200 and starting the coffee brewing automatic procedure on the coffee brewing apparatus 200 with steps (e) et seq. above.

In preferred embodiments of the invention which may be realized alone or together with one, several or all other features of the invention, because they provide more choices to the user when brewing coffee, the process of brewing coffee from coffee grounds obtained immediately before the brewing step from freshly ground coffee beans on an automatic coffee brewing apparatus 200 as described above in detail, wherein the coffee brewing step is conducted on a coffee brewing apparatus additionally comprising a "regular" coffee bean storage container 210 capable of storing and holding coffee beans and of supplying them via a coffee bean inlet 220 for brewing coffee.

The invention was described above in detail while referring to preferred embodiments and Figures showing said preferred embodiments. These preferred embodiments are presented for better explaining and understanding the invention and should not be construed to restrict the invention. The scope of the invention is defined only by the appended claims.

### List of Reference Numerals

- 100: Coffee bean supply device
- 110: Coffee bean supply device housing
- 111: at least one wall of coffee bean supply device 100
- 112: Partial upper (refill) opening of coffee bean supply device
- 113: Top wall of housing 110
- 114, 114: Side walls of housing 110
- 115, 115': Front wall, rear wall of housing 110
- 116: Bottom wall of housing 110
- 117: Coffee bean delivery opening
- 118, 118': Covers for refill opening 112 or delivery opening 117
- 119: Indicia
- 120: Inner space of coffee bean supply device housing 110
- 130, 130': Volume partition means
- 132: Element for manually moving partition means 134
- 134, 134': Variable volume partition means
- 135: Retaining spring
- 136: Retaining spring

- 200: Coffee brewing apparatus
- 205: Coffee bean supply device receiving means
- 206: Coffee bean supply device receiving opening in 205
- 210: Coffee bean storage container
- 220: Coffee bean inlet of coffee brewing apparatus 200
- 230: Water storage container
- 235: Water inlet
- 237: Water passageway
- 238: Water heater
- 239: Heated water passageway
- 240: Coffee bean passageway

- 250: Coffee bean grinding means / mill
- 251: Driving means/motor
- 252: Transmission / gear
- 253: Directional arrow for coffee bean movement
- 255: Coffee grounds passagway
- 260: Coffee brewing unit
- 270: Brewed coffee beverage outlet
- 280: Brewed coffee beverage drinking receptacle
- 290: Depleted coffee discharge container

- 300: Coffee bean storage container
- 310: Coffee bean storage space in the container 300
- 312: Storage space closed wall
- 316: Loading space
- 318: Loading space intermediate separate wall
- 320: Coffee bean loading gate
- 321: Retaining spring
- 322: Upper wall
- 324, 324: Side walls
- 326: Front wall
- 328: Rear wall
- 330: Funnel
- 332: Filling hole
- 334: Coffee bean supply device receiving opening
- 336: Sealing lip / bristles
- 338: Pushing closure element
- 340: Biasing spring
- 342: Directional movement arrow

## Claims

1. A coffee bean supply device (100) comprising
- a coffee bean supply device housing (110) formed by at least one wall (111) comprising a bottom wall (116), two side walls (114), a front wall (115), a rear wall (115') and a top wall (113), said at least one wall (111) surrounding an inner space (120) capable of being filled at least partially with coffee beans;
- said at least one wall (111) or said two side walls (114, 115) and/or top wall (113) including at least one partial upper opening (112) of the coffee bean supply device housing (110) capable of serving as a coffee bean refill opening (112);
- said coffee bean supply device housing (110) also comprising a coffee bean delivery opening (117) capable of serving as an opening allowing a delivery of coffee beans contained in the inner space (120) of said coffee bean supply device (100) to a coffee brewing apparatus' coffee bean inlet (220).

2. The coffee bean supply device (100) according to claim 1, wherein said partial upper opening serving as a coffee bean refill opening (112) and/or said coffee bean delivery opening (117) each are closed by an openable cover (118, 118); preferably wherein said partial upper opening serving as a coffee bean refill opening (112) and/or said coffee bean delivery opening (117) each are closed by an openable cover (118, 118'); more preferably wherein the coffee bean delivery opening cover (118') - if present - is closed when the coffee bean refill opening cover (118) is open.

3. The coffee bean supply device (100) according to any of the claims 1 or 2, wherein said coffee bean delivery opening (117) is located at a rear part of the coffee bean supply device's housing; preferably is located at a respective rear part of either the housing's bottom wall (116) or of one of the side walls (114, 114) or of the top wall 113 or is located at the housing's rear wall (115').

4. The coffee bean supply device (100) according to any one or more of the claims 1 to 3, wherein the coffee bean supply device housing (110) has one fixed inner volume or has a variable inner volume or is capable of being partitioned into at least two fixed or variable volumes by at least one volume partition means (130) or by at least one variable volume partition means (134).

5. The coffee bean supply device (100) according to any one or more of the claims 1 to 4, wherein the coffee bean supply device housing's at least one wall (111) is provided with one or more mechanical and/or graphic indicia (119) serving for varying the at least one variable volume partition wall (134) or its co-operating parts of the coffee bean supply device (100).

6. The coffee bean supply device (100) according to any one or more of the claims 1 to 5, said device (100) being provided with means for manually moving the device (100); preferably said device (100) being provided with means for manually or automatically withdrawing, inserting, turning, pushing, opening and/or closing the device (100) and/or loading the device with coffee beans.

7. A coffee brewing apparatus (200), comprising a water storage container (230) capable of storing and holding water and of supplying it via a water inlet (235) to a water heating means (238) for heating the water for brewing coffee; a coffee bean passageway (240) connecting a coffee bean inlet (220) to a coffee bean grinding means or mill (250); a coffee grounds passageway (255) connecting the mill (250) to a coffee brewing unit (270); the coffee brewing unit (260) where fresh coffee is brewed from the coffee grounds supplied by the coffee grounds passageway (255) and the hot water supplied by a water conveying means from the water heating means (238); a brewed coffee beverage outlet (270) filling the freshly brewed coffee into a drinking receptacle (280); and a depleted coffee discharge container (290), said coffee brewing apparatus (200) further comprising a coffee bean supply device receiving means (205) connected to, or integrated in the coffee brewing apparatus (200) and capable of receiving at least one coffee bean supply device (100) of any one or more of the claims 1 to 6 in an arrangement allowing a supply of coffee beans to the coffee brewing apparatus' coffee bean inlet (220) for brewing coffee.

8. The coffee brewing apparatus (200) according to claim 7, further comprising a regular coffee bean storage container (210) capable of storing and holding coffee beans and of supplying them via a coffee bean inlet (220) for brewing coffee.

9. The coffee brewing apparatus (200) according to any of the claims 7 or 8, wherein the apparatus (200) is capable of conducting the step of milling coffee beans in the coffee brewing apparatus' mill (250), until all coffee beans supplied to the coffee brewing apparatus mill (250) are ground to coffee grounds and the coffee grounds are guided to the coffee brewing unit (260).

10. The coffee brewing apparatus (200) according to any of the claims 7 or 8, wherein the apparatus (200) is capable of controlling the duration of the step of milling coffee beans in the coffee brewing apparatus' mill (250) by the coffee brewing apparatus' recognizing the position of the coffee bean supply device's mechanical indicia (119) of the delivered coffee bean amount.

11. A coffee bean storage container (300) capable of supplying and metering coffee beans from a coffee bean stock in a storage space (310) of the container (300) to a coffee bean supply device (100) of any of the claims 1 to 6 connected to the container (300), said coffee bean storage container (300) comprising, below the storage space (310) surrounded by at least one closed wall (312), a loading space (316) accessible via a coffee bean supply device receiving opening (334) and capable of receiving at least one coffee bean supply device (100) of any of the claims 1 to 6, and further comprising at least one intermediate separate wall (318) provided with at least one coffee bean loading gate (320), the position of the coffee bean loading gate (320) matching with the coffee bean supply device's coffee bean refill opening (112), thereby enabling a supply of coffee beans upon opening of the coffee bean loading gate (320), manually or through the partial upper opening (112) of the coffee bean supply device housing (110) to the inner space of the coffee bean supply device (100) received in said coffee bean supply device receiving opening 334.

12. The coffee bean storage container (300) according to claim 11, wherein the at least one closed wall (312) comprises an upper wall (322) optionally comprising a filling hole (332), two side walls (324, 324), a front wall (326), a rear wall (328) and the intermediate separate wall (318), wherein said front wall (326) comprises the receiving opening (334) in its lower part and wherein the intermediate separate wall (318) is shaped as a funnel having its lowest point above the coffee bean loading gate (320) so as to allow a loading of coffee beans to a coffee bean supply device (100) due to gravity.

13. A process of brewing coffee from coffee grounds obtained immediately before the brewing step from freshly ground coffee beans on an automatic coffee brewing apparatus (200), the process comprising the steps of
(a) providing for a coffee brewing apparatus (200) comprising a water storage container (230) capable of storing and holding water and of supplying it via a water inlet (235) to a water heating means (238) for heating the water for brewing coffee; a coffee bean passageway (240) connecting the coffee brewing apparatus' coffee bean inlet (210) to a coffee grinding means or mill (250); a coffee grounds passageway (255) connecting the mill (250) to a coffee brewing unit (270); the coffee brewing unit (260) where fresh coffee is brewed from the coffee grounds supplied by the coffee grounds passageway (255) and the hot water supplied by water conveying means from the water heating means (238); a brewed coffee beverage outlet (270) filling the freshly brewed coffee into a drinking receptacle (280); and a depleted coffee discharge container (290);
(b) filling a releasable detachable coffee bean supply device (100) as claimed in any one or more of claims 1 to 6 with a type of desired coffee beans in a predetermined coffee bean amount sufficient for brewing at least one portion of a freshly brewed coffee beverage, preferably with customized origin coffee beans and/or customized roastings of coffee beans and/or customized blends of coffee beans;
(c) connecting the releasably detachable coffee bean supply device (100) filled in step (b) to, or integrate it in, said coffee brewing apparatus (200) and causing the filling of coffee beans in the coffee bean supply device (100) to move to the coffee bean apparatus' coffee bean inlet (220);
(d) starting the coffee brewing automated procedure on the coffee brewing apparatus (200), whereupon
(e) the coffee brewing apparatus (200) requests a supply of said predetermined amount of coffee beans from the coffee bean supply device (100)
(f) to be delivered from the coffee bean supply device's housing inner space (120) and passing its coffee bean delivery opening (117)
(g) to the coffee brewing apparatus' coffee bean inlet (220); and
(h) delivered via the coffee brewing apparatus' coffee bean passageway (240) to the coffee bean grinding means or mill (250) and further to the coffee brewing apparatus' coffee brewing unit (260);
(i) receiving a coffee beverage at the coffee brewing apparatus' brewed coffee beverage outlet (270); and optionally
(j) disconnecting the coffee bean supply device (100) connected in step (c) from said coffee brewing apparatus (200); and optionally
(k) refilling said detachable coffee bean supply device (100) as claimed in any one or more of the claims 1 to 6 and disconnected in step (j) above with selected coffee beans, connecting said coffee bean supply device (100) to, or integrate it in, the coffee brewing apparatus (200) and starting the coffee brewing automatic procedure on the coffee brewing apparatus (200) with steps (d) et seq. above.

14. A process of brewing coffee from coffee grounds obtained immediately before the brewing step from freshly ground coffee beans on an automatic coffee brewing apparatus (200), the process comprising the steps of
(a) providing for a coffee brewing apparatus (200) comprising a water storage container (230) capable of storing and holding water and of supplying it via a water inlet (235) to a water heating means (238) for heating the water for brewing coffee; a coffee bean passageway (240) connecting the coffee brewing apparatus' coffee bean inlet (210) to a coffee grinding means or mill (250); a coffee grounds passageway (255) connecting the mill (250) to a coffee brewing unit (270); the coffee brewing unit (260) where fresh coffee is brewed from the coffee grounds supplied by the coffee grounds passageway (255) and the hot water supplied by water conveying means from the water heating means (238); a brewed coffee beverage outlet (270) filling the freshly brewed coffee into a drinking receptacle (280); and a depleted coffee discharge container (290);
(b) providing for a coffee bean storage container (300) as claimed in any one of claims 11 and 12 and capable of supplying and metering coffee beans from a coffee bean stock in a storage space (310) of the container (300) to a coffee bean supply device (100) of any of the claims 1 to 6 and connected to the coffee bean storage container (300), and filling the storage space (310) of the coffee bean storage container (300) with a type of desired coffee beans in an amount sufficient for brewing at least one portion of a freshly brewed coffee beverage, preferably with customized origin coffee beans and/or customized roastings of coffee beans and/or customized blends of coffee beans;
(c) filling a releasable detachable coffee bean supply device (100) as claimed in any one or more of claims 1 to 6 with said type of desired coffee beans in a predetermined coffee bean amount sufficient for brewing at least one portion of a freshly brewed coffee beverage via the coffee bean storage container (300) by inserting at least one coffee bean supply device (100) of any of the claims 1 to 6 into the coffee bean storage container's loading space (316) and allowing said predetermined amount of coffee beans to move from the coffee bean storage container (300) to the inner volume of the coffee bean supply device (100) ;
(d) connecting the releasably detachable coffee bean supply device (100) filled in step (c) to, or integrate it in, said coffee brewing apparatus (200) and causing the filling of coffee beans in the coffee bean supply device (100) to move to the coffee bean apparatus' coffee bean inlet (220);
(e) starting the coffee brewing automated procedure on the coffee brewing apparatus (200), whereupon
(f) the coffee brewing apparatus (200) requests a supply of said predetermined amount of coffee beans from the coffee bean supply device (100)
(g) to be delivered from the coffee bean supply device's housing inner space (120) and passing its coffee bean delivery opening (117)
(h) to the coffee brewing apparatus' coffee bean inlet (220); and
(i) delivered via the coffee brewing apparatus' coffee bean passageway (240) to the coffee bean grinding means or mill (250) and further to the coffee brewing apparatus' coffee brewing unit (260);
(j) receiving a coffee beverage at the coffee brewing apparatus' brewed coffee beverage outlet (270); and optionally
(k) disconnecting the coffee bean supply device (100) connected or integrated in step (d) from said coffee brewing apparatus (200); and optionally
(l) refilling said detachable coffee bean supply device (100) as claimed in any one or more of the claims 1 to 6 and disconnected in step (k) above manually or by means of the coffee bean storage container (300) with selected coffee beans, connecting said coffee bean supply device (100) to, or integrate it in, the coffee brewing apparatus (200) and starting the coffee brewing automatic procedure on the coffee brewing apparatus (200) with steps (e) et seq. above.

15. The process of brewing coffee from coffee grounds obtained immediately before the brewing step from freshly ground coffee beans on an automatic coffee brewing apparatus (200) as claimed in any one of claims 13 or 14, wherein the coffee brewing step is conducted on a coffee brewing machine additionally comprising a coffee bean storage container (210) capable of storing and holding coffee beans and of supplying them via a coffee bean inlet (220) for brewing coffee.

## Amended claims

### Amended claims in accordance with Rule 137(2) EPC.

1. A coffee bean supply device (100) comprising
- a coffee bean supply device housing (110) formed by at least one wall (111) comprising a bottom wall (116), two side walls (114), a front wall (115), a rear wall (115') and a top wall (113), said at least one wall (111) surrounding an inner space (120) capable of being filled at least partially with coffee beans;
- said coffee bean supply device (100) being attachable to, and detachable from, a coffee brewing apparatus; and
- said coffee bean supply device housing's at least one wall (111) or said two side walls (114, 115) and/or top wall (113) including at least one partial upper opening (112) of the coffee bean supply device housing (110) capable of serving as a coffee bean refill opening (112); and
- said coffee bean supply device housing (110) also comprising a coffee bean delivery opening (117) capable of serving as an opening allowing a delivery of coffee beans contained in the inner space (120) of said coffee bean supply device (100) to a coffee brewing apparatus' coffee bean inlet (220).

2. The coffee bean supply device (100) according to claim 1, wherein said partial upper opening serving as a coffee bean refill opening (112) and/or said coffee bean delivery opening (117) each are closed by an openable cover (118, 118); preferably wherein said partial upper opening serving as a coffee bean refill opening (112) and/or said coffee bean delivery opening (117) each are closed by an openable cover (118, 118'); more preferably wherein the coffee bean delivery opening cover (118') - if present - is closed when the coffee bean refill opening cover (118) is open.

3. The coffee bean supply device (100) according to any of the claims 1 or 2, wherein said coffee bean delivery opening (117) is located at a rear part of the coffee bean supply device's housing; preferably is located at a respective rear part of either the housing's bottom wall (116) or of one of the side walls (114, 114) or of the top wall 113 or is located at the housing's rear wall (115').

4. The coffee bean supply device (100) according to any one or more of the claims 1 to 3, wherein the coffee bean supply device housing (110) has one fixed inner volume or has a variable inner volume or is capable of being partitioned into at least two fixed or variable volumes by at least one volume partition means (130) or by at least one variable volume partition means (134).

5. The coffee bean supply device (100) according to any one or more of the claims 1 to 4, wherein the coffee bean supply device housing's at least one wall (111) is provided with one or more mechanical and/or graphic indicia (119) serving for varying the at least one variable volume partition wall (134) or its co-operating parts of the coffee bean supply device (100).

6. The coffee bean supply device (100) according to any one or more of the claims 1 to 5, said device (100) being provided with means for manually moving the device (100); preferably said device (100) being provided with means for manually or automatically withdrawing, inserting, turning, pushing, opening and/or closing the device (100) and/or loading the device with coffee beans.

7. A coffee brewing apparatus (200), comprising a water storage container (230) capable of storing and holding water and of supplying it via a water inlet (235) to a water heating means (238) for heating the water for brewing coffee; a coffee bean passageway (240) connecting a coffee bean inlet (220) to a coffee bean grinding means or mill (250); a coffee grounds passageway (255) connecting the mill (250) to a coffee brewing unit (270); the coffee brewing unit (260) where fresh coffee is brewed from the coffee grounds supplied by the coffee grounds passageway (255) and the hot water supplied by a water conveying means from the water heating means (238); a brewed coffee beverage outlet (270) filling the freshly brewed coffee into a drinking receptacle (280); and a depleted coffee discharge container (290), said coffee brewing apparatus (200) further comprising a coffee bean supply device receiving means (205) connected to, or integrated in the coffee brewing apparatus (200) and capable of receiving at least one coffee bean supply device (100) of any one or more of the claims 1 to 6 in an arrangement allowing a supply of coffee beans to the coffee brewing apparatus' coffee bean inlet (220) for brewing coffee.

8. The coffee brewing apparatus (200) according to claim 7, further comprising a regular coffee bean storage container (210) capable of storing and holding coffee beans and of supplying them via a coffee bean inlet (220) for brewing coffee.

9. The coffee brewing apparatus (200) according to any of the claims 7 or 8, wherein the apparatus (200) is capable of conducting the step of milling coffee beans in the coffee brewing apparatus' mill (250), until all coffee beans supplied to the coffee brewing apparatus mill (250) are ground to coffee grounds and the coffee grounds are guided to the coffee brewing unit (260).

10. The coffee brewing apparatus (200) according to any of the claims 7 or 8, wherein the apparatus (200) is capable of controlling the duration of the step of milling coffee beans in the coffee brewing apparatus' mill (250) by the coffee brewing apparatus' recognizing the position of the coffee bean supply device's mechanical indicia (119) of the delivered coffee bean amount.

11. A coffee bean storage container (300) capable of supplying and metering coffee beans from a coffee bean stock in a storage space (310) of the container (300) to a coffee bean supply device (100) of any of the claims 1 to 6 connected to the container (300), said coffee bean storage container (300) comprising, below the storage space (310) surrounded by at least one closed wall (312), a loading space (316) accessible via a coffee bean supply device receiving opening (334) and capable of receiving at least one coffee bean supply device (100) of any of the claims 1 to 6, and further comprising at least one intermediate separate wall (318) provided with at least one coffee bean loading gate (320), the position of the coffee bean loading gate (320) matching with the coffee bean supply device's coffee bean refill opening (112), thereby enabling a supply of coffee beans upon opening of the coffee bean loading gate (320), manually or through the partial upper opening (112) of the coffee bean supply device housing (110) to the inner space of the coffee bean supply device (100) received in said coffee bean supply device receiving opening 334.

12. The coffee bean storage container (300) according to claim 11, wherein the at least one closed wall (312) comprises an upper wall (322) optionally comprising a filling hole (332), two side walls (324, 324), a front wall (326), a rear wall (328) and the intermediate separate wall (318), wherein said front wall (326) comprises the receiving opening (334) in its lower part and wherein the intermediate separate wall (318) is shaped as a funnel having its lowest point above the coffee bean loading gate (320) so as to allow a loading of coffee beans to a coffee bean supply device (100) due to gravity.

13. A process of brewing coffee from coffee grounds obtained immediately before the brewing step from freshly ground coffee beans on an automatic coffee brewing apparatus (200), the process comprising the steps of
(a) providing for a coffee brewing apparatus (200) comprising a water storage container (230) capable of storing and holding water and of supplying it via a water inlet (235) to a water heating means (238) for heating the water for brewing coffee; a coffee bean passageway (240) connecting the coffee brewing apparatus' coffee bean inlet (210) to a coffee grinding means or mill (250); a coffee grounds passageway (255) connecting the mill (250) to a coffee brewing unit (270); the coffee brewing unit (260) where fresh coffee is brewed from the coffee grounds supplied by the coffee grounds passageway (255) and the hot water supplied by water conveying means from the water heating means (238); a brewed coffee beverage outlet (270) filling the freshly brewed coffee into a drinking receptacle (280); and a depleted coffee discharge container (290);
(b) filling a releasably detachable coffee bean supply device (100) as claimed in any one or more of claims 1 to 6 with a type of desired coffee beans in a predetermined coffee bean amount sufficient for brewing at least one portion of a freshly brewed coffee beverage, preferably with customized origin coffee beans and/or customized roastings of coffee beans and/or customized blends of coffee beans;
(c) connecting the releasably detachable coffee bean supply device (100) filled in step (b) to, or integrate it in, said coffee brewing apparatus (200) and causing the filling of coffee beans in the coffee bean supply device (100) to move to the coffee bean apparatus' coffee bean inlet (220);
(d) starting the coffee brewing automated procedure on the coffee brewing apparatus (200), whereupon
(e) the coffee brewing apparatus (200) requests a supply of said predetermined amount of coffee beans from the coffee bean supply device (100)
(f) to be delivered from the coffee bean supply device's housing inner space (120) and passing its coffee bean delivery opening (117)
(g) to the coffee brewing apparatus' coffee bean inlet (220); and
(h) delivered via the coffee brewing apparatus' coffee bean passageway (240) to the coffee bean grinding means or mill (250) and further to the coffee brewing apparatus' coffee brewing unit (260);
(i) receiving a coffee beverage at the coffee brewing apparatus' brewed coffee beverage outlet (270); and optionally
(j) disconnecting the coffee bean supply device (100) connected in step (c) from said coffee brewing apparatus (200); and optionally
(k) refilling said detachable coffee bean supply device (100) as claimed in any one or more of the claims 1 to 6 and disconnected in step (j) above with selected coffee beans, connecting said coffee bean supply device (100) to, or integrate it in, the coffee brewing apparatus (200) and starting the coffee brewing automatic procedure on the coffee brewing apparatus (200) with steps (d) et seq. above.

14. A process of brewing coffee from coffee grounds obtained immediately before the brewing step from freshly ground coffee beans on an automatic coffee brewing apparatus (200), the process comprising the steps of
(a) providing for a coffee brewing apparatus (200) comprising a water storage container (230) capable of storing and holding water and of supplying it via a water inlet (235) to a water heating means (238) for heating the water for brewing coffee; a coffee bean passageway (240) connecting the coffee brewing apparatus' coffee bean inlet (210) to a coffee grinding means or mill (250); a coffee grounds passageway (255) connecting the mill (250) to a coffee brewing unit (270); the coffee brewing unit (260) where fresh coffee is brewed from the coffee grounds supplied by the coffee grounds passageway (255) and the hot water supplied by water conveying means from the water heating means (238); a brewed coffee beverage outlet (270) filling the freshly brewed coffee into a drinking receptacle (280); and a depleted coffee discharge container (290);
(b) providing for a coffee bean storage container (300) as claimed in any one of claims 11 and 12 and capable of supplying and metering coffee beans from a coffee bean stock in a storage space (310) of the container (300) to a coffee bean supply device (100) of any of the claims 1 to 6 and connected to the coffee bean storage container (300), and filling the storage space (310) of the coffee bean storage container (300) with a type of desired coffee beans in an amount sufficient for brewing at least one portion of a freshly brewed coffee beverage, preferably with customized origin coffee beans and/or customized roastings of coffee beans and/or customized blends of coffee beans;
(c) filling a releasably detachable coffee bean supply device (100) as claimed in any one or more of claims 1 to 6 with said type of desired coffee beans in a predetermined coffee bean amount sufficient for brewing at least one portion of a freshly brewed coffee beverage via the coffee bean storage container (300) by inserting at least one coffee bean supply device (100) of any of the claims 1 to 6 into the coffee bean storage container's loading space (316) and allowing said predetermined amount of coffee beans to move from the coffee bean storage container (300) to the inner volume of the coffee bean supply device (100) ;
(d) connecting the releasably detachable coffee bean supply device (100) filled in step (c) to, or integrate it in, said coffee brewing apparatus (200) and causing the filling of coffee beans in the coffee bean supply device (100) to move to the coffee bean apparatus' coffee bean inlet (220);
(e) starting the coffee brewing automated procedure on the coffee brewing apparatus (200), whereupon
(f) the coffee brewing apparatus (200) requests a supply of said predetermined amount of coffee beans from the coffee bean supply device (100)
(g) to be delivered from the coffee bean supply device's housing inner space (120) and passing its coffee bean delivery opening (117)
(h) to the coffee brewing apparatus' coffee bean inlet (220); and
(i) delivered via the coffee brewing apparatus' coffee bean passageway (240) to the coffee bean grinding means or mill (250) and further to the coffee brewing apparatus' coffee brewing unit (260);
(j) receiving a coffee beverage at the coffee brewing apparatus' brewed coffee beverage outlet (270); and optionally
(k) disconnecting the coffee bean supply device (100) connected or integrated in step (d) from said coffee brewing apparatus (200); and optionally
(l) refilling said detachable coffee bean supply device (100) as claimed in any one or more of the claims 1 to 6 and disconnected in step (k) above manually or by means of the coffee bean storage container (300) with selected coffee beans, connecting said coffee bean supply device (100) to, or integrate it in, the coffee brewing apparatus (200) and starting the coffee brewing automatic procedure on the coffee brewing apparatus (200) with steps (e) et seq. above.

15. The process of brewing coffee from coffee grounds obtained immediately before the brewing step from freshly ground coffee beans on an automatic coffee brewing apparatus (200) as claimed in any one of claims 13 or 14, wherein the coffee brewing step is conducted on a coffee brewing machine additionally comprising a coffee bean storage container (210) capable of storing and holding coffee beans and of supplying them via a coffee bean inlet (220) for brewing coffee.
